# EUROPEAN PATENT SPECIFICATION

(11) **EP 4 533 985 B1**
(45) Date of publication and mention of the grant of the patent: **22.04.2026**
(21) Application number: 24204784.3
(22) Date of filing: 04.10.2024
(51) Int. Cl.: A47J 37/06

(54) **AIR FRYER WITH HIGH HEATING EFFICIENCY**
LUFTFRITTEUSE MIT HOHER HEIZEFFIZIENZ
FRITEUSE À AIR CHAUD À EFFICACITÉ ÉLEVÉE

(30) Priority: 05.10.2023 CN 202311289398; 01.12.2023 CN 202311639277; 01.12.2023 CN 202323273426 U
(43) Date of publication of application: 09.04.2025
(73) Proprietor: Ningbo Careline Electric Appliance Co., Ltd., Ningbo, Zhejiang 315000 (CN)
(72) Inventor: ZHANG, Yichi, Ningbo, Zhejiang (CN); PAN, Huayuan, Ningbo, Zhejiang (CN); HUO, Zhian, Ningbo, Zhejiang (CN)
(74) Representative: Meyer-Dulheuer MD Legal Patentanwälte PartG mbB

(56) References cited:
- CN-A- 111 374 567
- CN-A- 115 500 709
- CN-U- 205 923 814
- CN-U- 215 687 003
- CN-U- 219 645 566

## Description

### CROSS-REFERENCE TO RELATED APPLICATIONS

The present disclosure claims the priority of Chinese patent application No. 2023112893980, filed to the CNIPA on October 5, 2023 and entitled "Multi-dimensional Three-dimensional Heating Air Fryer", Chinese patent application No. 2023116392774, filed to the CNIPA on December 1, 2023 and entitled "Air Fryer with Efficient Cooking Effect", and Chinese patent application No. 2023232734268, filed to the CNIPA on December 1, 2023 and entitled "Air Fryer with High Heating Efficiency.

### TECHNICAL FIELD

The present disclosure relates to the technical field of kitchen appliances and cooking appliances, particularly to an air fryer, and more particularly to an air fryer with high heating efficiency.

### BACKGROUND

With the improvement of people's living standards, many people pay more and more attention to healthy diet, and air fryers that use air instead of hot oil for cooking are more and more popular among people. The existing air fryer generally includes a fryer body and a cooking cavity disposed in the fryer body, and the cooking cavity communicates with an air frying system, and cooking of food can be achieved by generating a circulating heat flow through the air frying system. The air frying system of the existing air fryer is mostly disposed at the top of the cooking cavity, and when the air fryer is operated, the circulating heat flow generated by the air frying system flows from top to bottom to cook the food, which easily causes a difference in cooking effect of the upper and lower parts of the food, the cooking effect is poor, and the user experience is poor; and at the same time, when the food is placed in a frying basket, because the blocking of the food will prevent the heat flow from reaching the bottom of the food, the bottom of the food cannot be heated, and a user needs to turn over the food during air frying, which not only has low heating efficiency, but also has cumbersome operation and poor user experience. CN 205 923 814 U relates to an air fryer comprising a cooking cavity disposed within a fryer body, a hot air cavity disposed outside a rear portion of the cooking cavity, and an air frying system disposed within the hot air cavity and configured to generate a circulating heat flow, a frying basket assembly is removably disposed within the cooking cavity, the frying basket assembly comprises a food basket and a flow guide disposed between the food basket and an inner wall of the cooking cavity, a second flow guide forming a single functional unit with the flow guide extends from the left and right sides of the food basket to a rear side of the food basket, a heat circulation air channel is formed between the flow guides and a side wall of the cooking cavity, a circulating heat flow generated by the air frying system is adapted to be guided by the flow guides into the heat circulation air channel. CN 219 645 566 U relates to an air fryer wherein the frying assembly is positioned at the rear of the body and set up to generate an airflow between the food basket and the interior surfaces of the cooking cavity which is then guided to enter the food basket from the front and flows through the food basket back to the air frying assembly. The food basket comprises perforated sheets at its front and rear sides and an additional perforated sheet is placed between the air frying assembly and the cooking cavity to ensure laminar flow. No flow guides are present in the vicinity of the frying basket.

### SUMMARY

In order to solve the above at least one technical problem, the present invention discloses the following technical solutions:
an air fryer with high heating efficiency includes a fryer body, a cooking cavity disposed within the fryer body, a hot air cavity disposed outside a rear portion of the cooking cavity, and an air frying system disposed within the hot air cavity and configured to generate a circulating heat flow, a side wall, adjacent to a side of the air frying system, of the cooking cavity is provided with ventilation holes corresponding to the air frying system, and the ventilation holes include air return holes in a middle and hot air holes in outer edges of the air return holes; a frying basket assembly is removably disposed within the cooking cavity, the frying basket assembly includes a food basket and a flow guide disposed between the food basket and an inner wall of the cooking cavity, at least front and rear side walls of the food basket are respectively provided with air inlet holes and air outlet holes, the air outlet holes of the food basket correspond to the air return holes, and the flow guide is adapted to extend from left and right sides of the food basket to a rear side of the food basket; and a heat circulation air channel communicating with the hot air holes is formed between the flow guide and a side wall of the cooking cavity, and a circulating heat flow generated by the air frying system enters the cooking cavity through the hot air holes and is adapted to be guided by the flow guide into the heat circulation air channel and flows to a front of the cooking cavity, enters the food basket from the air inlet holes at the front side of the food basket and flows out from the air outlet holes and flows back to the hot air cavity through the air return holes.

In one or more embodiments, the flow guide is a circular arc-shaped flow guide structure longitudinally disposed on both sides of the food basket, parallel to a side wall of the food basket, and extending from both sides of the food basket to the rear side of the food basket.

In one or more embodiments, the frying basket assembly further includes an oil receiving pan disposed under the food basket, a bottom of the food basket is provided with oil leakage holes, and the oil receiving pan is adapted to completely cover the oil leakage holes.

In one or more embodiments, the flow guide is disposed at an outer edge of the oil receiving pan and is formed by the oil receiving pan extending upward.

In one or more embodiments, the oil receiving pan is adapted to enclose a receiving cavity open at a top and at a front with the flow guide, a buckle is disposed on the food basket, an inner wall of the receiving cavity is provided with a limiting structure that can be clamped to the buckle, the food basket is adapted to be detachably suspended within the receiving cavity by the limiting structure and the buckle, a side, facing the food basket, of the flow guide is provided with convex ribs, and the convex ribs are adapted to abut against a side wall of the food basket.

In one or more embodiments, a bottom of the flow guide is adapted to be connected with the oil receiving pan, a top of the flow guide is adapted to extend to an upper part of the cooking cavity, and the top of the flow guide is provided with a handle extending to an outside of the cooking cavity, a top of the cooking cavity has a top opening, an outer edge of the top opening is provided with matching slots matched with the handle, when the frying basket assembly is disposed within the cooking cavity, the handle is disposed within the matching slots, and a top of the handle is flush with tops of the matching slots, and when the frying basket assembly is disposed within the cooking cavity, a bottom of the handle is adapted to abut against bottoms of the matching slots, and the frying basket assembly is adapted to be suspended within the cooking cavity by the handle.

In one or more embodiments, the top of the cooking cavity is provided with a top opening, a top cover that can be turned over to open and close the top opening is disposed at the top opening, and the top cover is provided with a window assembly corresponding to the frying basket assembly.

In one or more embodiments, a first flow guiding structure corresponding to the air inlet holes is disposed on a front side wall of the cooking cavity; and a heat flow generated by the air frying system is guided to the air inlet holes by the first flow guiding structure.

In one or more embodiments, the first flow guiding structure includes a guiding portion protruding from the front side wall of the cooking cavity and a plurality of extension portions arranged at intervals, one ends of the extension portions are connected to the guiding portion and the other ends of the extension portions are adapted to extend towards an edge of the front side wall of the cooking cavity, and a flow guiding region is adapted to be formed between two adjacent extension portions, and the flow guiding regions correspond to at least part of the air inlet holes; and a hot air gap is formed between left and right side walls of the food basket and the inner wall of the cooking cavity, and a heat flow in the hot air gap enters the flow guiding regions and is adapted to be blocked and collected by the extension portions and the guiding portion and is introduced into the food basket through the air inlet holes.

In one or more embodiments, each extension portion has an arc-shaped structure, extension directions of the extension portions are adapted to be directed towards left and right side walls of the cooking cavity, respectively, facing the same direction, and the flow guiding region with a hemispherical shape is adapted to be formed between two adjacent extension portions, and a heat flow in the flow guiding regions is adapted to flow in a direction opposite to the extension directions of the extension portions.

In one or more embodiments, both the guiding portion and the extension portions have a trapezoidal cross section with a small upper part and a large lower part.

In one or more embodiments, the guiding portion is located in a middle of the front side wall of the cooking cavity, and a projection of the guiding portion on a front side wall of the food basket is located in a middle of the front side wall of the food basket, the extension portions are formed by the guiding portion extending outwardly, and the guiding portion and the extension portions and the front side wall of the cooking cavity are integrally formed.

In one or more embodiments, a frying plate is suspended inside the food basket, and the frying plate is provided with a plurality of small holes communicating an upper space with a lower space of the frying plate; and the air inlet holes are formed in a front side wall of the food basket above and below the frying plate.

Further, a bottom of the frying plate is provided with a plurality of elongated guide grooves in parallel, the guide grooves are formed by the bottom of the frying plate being recessed upward, the guide grooves each have a front opening and a rear opening, the front openings correspond to at least part of the air inlet holes, and the rear openings correspond to at least part of the air outlet holes.

In one or more embodiments, a first flow guiding structure corresponding to the air inlet holes is disposed on a front side wall of the cooking cavity, a heat flow generated by the air frying system is guided to the air inlet holes by the first flow guiding structure, a projection of the frying plate on the front side wall of the cooking cavity is located in a middle of the first flow guiding structure, and a projection of the frying plate on a rear side wall of the cooking cavity is located in a middle of the air return holes.

In one or more embodiments, the air frying system includes a heat circulation fan and a heat generating tube disposed in front of the heat circulation fan, an air guide cover is disposed between the heat circulation fan and the heat generating tube, and a flow guide channel is formed between the air guide cover and an inner wall of the hot air cavity, the flow guide channel is provided with a hot air outlet, and the hot air outlet is located at an edge of the air guide cover; a hot air inlet communicating with the flow guide channel and corresponding to the heat circulation fan is disposed in a middle of the air guide cover; and the ventilation holes include the air return holes corresponding to the hot air inlet and the hot air holes corresponding to the hot air outlet, and a heat flow within the food basket is adapted to flow out from the air outlet holes, passes through the air return holes, enters the flow guide channel from the hot air inlet, is guided to the hot air outlet by the flow guide channel, and flows into the cooking cavity from the hot air outlet through the hot air holes.

In one or more embodiments, the top of the cooking cavity has a top opening, a handle is disposed on both sides of the frying basket assembly, an outer edge of the top opening is provided with receiving grooves matched with the handle, when the frying basket assembly is disposed within the cooking cavity, the handle is adapted to be disposed within the receiving grooves, and a top end of the handle is flush with top ends of the receiving grooves, and when the handle is disposed within the receiving grooves, a bottom of the handle is adapted to abut against bottoms of the receiving grooves, and the frying basket assembly is adapted to be suspended within the cooking cavity by the handle.

In one or more embodiments, the food basket is provided with a receiving cavity, a bottom of the receiving cavity is provided with a second flow guiding structure protruding upward, and the second flow guiding structure is adapted to correspond to at least part of the air inlet holes; and a hot air gap is formed between the left and right side walls of the food basket and the inner wall of the cooking cavity, and a circulating heat flow in the hot air gap enters the receiving cavity through the air inlet holes, is at least partially guided by the second flow guiding structure and flows towards a top of the receiving cavity.

Further, the second flow guiding structure includes a plurality of wave-shaped flow guiding ribs formed by a bottom wall of the food basket being recessed upwards.

In one or more embodiments, the second flow guiding structure includes a plurality of spaced flow guiding ribs protruding from a bottom wall of the receiving cavity and extending from an edge of the bottom wall of the receiving cavity to a middle of the bottom wall of the receiving cavity.

### BRIEF DESCRIPTION OF THE DRAWINGS

To illustrate the technical solutions in the specific embodiments of the present disclosure or the prior art more clearly, the accompanying drawings required for use in the specific embodiments or the prior art will be briefly described below, and obviously, the accompanying drawings in the following description are some embodiments of the present disclosure, and other drawings can be obtained from these drawings for those skill in the art without paying inventive steps.
FIG. 1 is a schematic diagram of an overall structure of an air fryer according to a first embodiment of the present disclosure.
FIG. 2 is a schematic exploded view of a partial structure of the air fryer according to the first embodiment of the present disclosure.
FIG. 3 is a schematic diagram showing heat flow circulation in the air fryer according to the first embodiment of the present disclosure.
FIG. 4 is a partial cross-sectional view of the air fryer according to the first embodiment of the present disclosure.
FIG. 5 is a schematic diagram of an overall structure of an air fryer according to a second embodiment of the present disclosure.
FIG. 6 is a half-sectional view of the air fryer according to the second embodiment of the present disclosure.
FIG. 7 is a top view of an inner structure of the air fryer according to the second embodiment of the present disclosure.
FIG. 8 is a schematic diagram of a food basket of the air fryer according to the second embodiment of the present disclosure.
FIG. 9 is a schematic diagram of a first flow guiding structure of the air fryer according to the second embodiment of the present disclosure.
FIG. 10 is a schematic diagram of an overall structure of an air fryer according to a third embodiment of the present disclosure.
FIG. 11 is a schematic exploded view of a partial structure of the air fryer according to the third embodiment of the present disclosure.
FIG. 12 is a side cross-sectional view of the air fryer according to the third embodiment of the present disclosure.
FIG. 13 is a schematic diagram of an overall structure of the air fryer according to the third embodiment of the present disclosure.
FIG. 14 is a schematic diagram showing airflow circulation in the air fryer according to the third embodiment of the present disclosure.

Signs: 10-fryer body; 11-cooking cavity; 12-hot air cavity; 13-air frying system; 14-ventilation hole; 141-air return hole; 142-hot air hole; 15-heat circulation air channel; 16-top opening; 17-matching slot; 18-top cover; 19-window assembly; 20-frying basket assembly; 21-food basket; 211-air inlet hole; 212-air outlet hole; 213-oil leakage hole; 214-buckle; 22-flow guide; 221-convex rib; 23-oil receiving pan; 24-receiving cavity; 241-limiting structure; 25-handle; 510-pot body; 511-cooking cavity; 512-hot air cavity; 513-ventilation hole; 5131-air return hole; 5132-hot air hole; 514-hot air gap; 515-air guide cover; 5151-hot air inlet; 516-flow guide channel; 5161-hot air outlet; 520-frying basket assembly; 521-food basket; 5211-air inlet hole; 5212-air outlet hole; 5213-receiving cavity; 522-frying plate; 5221-guide groove; 530-air frying system; 531-driving motor; 532-heat circulation fan; 533-heat generating tube; 540-first flow guiding structure; 541-guiding portion; 542-extension portion; 543-flow guiding region; 610-fryer body; 611-cooking cavity; 612-hot air cavity; 613-ventilation hole; 6131-air return hole; 6132-hot air hole; 614-hot air gap; 615-top opening; 616-receiving groove; 617-heat circulation air channel; 618-top cover; 619-visual component; 620-air frying system; 630-frying basket assembly; 631-food basket; 6311-air inlet hole; 6312-air outlet hole; 6313-handle; 6314-receiving cavity; 632-second flow guiding structure; 6321-flow guiding rib; and 640-hinge structure.

### DETAILED DESCRIPTION

The present application provides an air fryer with high heating efficiency, so as to solve the technical problems of poor steaming effects and poor user experience of the existing air fryer.

In order to solve the above technical problems, the present invention provides an air fryer with high heating efficiency, including a fryer body, a cooking cavity disposed within the fryer body, a hot air cavity disposed outside a rear portion of the cooking cavity, and an air frying system disposed within the hot air cavity and configured to generate a circulating heat flow, wherein a side wall, adjacent to a side of the air frying system, of the cooking cavity is provided with ventilation holes corresponding to the air frying system, and the ventilation holes include air return holes in a middle and hot air holes in outer edges of the air return holes; a frying basket assembly is removably disposed within the cooking cavity, the frying basket assembly includes a food basket and a flow guide disposed between the food basket and an inner wall of the cooking cavity, at least front and rear side walls of the food basket are respectively provided with air inlet holes and air outlet holes, the air outlet holes of the food basket correspond to the air return holes, and the flow guide is adapted to extend from left and right sides of the food basket to a rear side of the food basket; and a heat circulation air channel communicating with the hot air holes is formed between the flow guide and a side wall of the cooking cavity, and a circulating heat flow generated by the air frying system enters the cooking cavity through the hot air holes and is adapted to be guided by the flow guide into the heat circulation air channel and flows to a front of the cooking cavity, enters the food basket from the air inlet holes at the front side of the food basket and flows out from the air outlet holes and flows back to the hot air cavity through the air return holes. In the present application, by respectively disposing the air inlet holes and the air outlet holes in at least the front and rear side walls of the food basket, the circulating heat flow generated by the air frying system disposed on the side of the cooking cavity can enter and exit the food basket to cook food, effectively improving the applicability of the frying basket assembly and user experience; and at the same time, by disposing the flow guide between the food basket and the inner wall of the cooking cavity, the circulating heat flow generated by the air frying system is guided to the front side of the food basket, so that the circulating heat flow flows in from the front side of the food basket and flows out from the rear side of the food basket, which can avoid mutual influence between inlet and outlet air of the food basket, thereby improving cooking efficiency.

**In** an optional embodiment, the flow guide is a circular arc-shaped flow guide structure longitudinally disposed on both sides of the food basket, parallel to a side wall of the food basket, and extending from both sides of the food basket to the rear side of the food basket. By disposing the flow guide as the circular arc-shaped guide structure, the wind resistance of the circulating heat flow flowing in the heat circulation air channel can be effectively reduced, thereby improving the flow rate of the circulating heat flow and cooking efficiency.

**In** an optional embodiment, the frying basket assembly further includes an oil receiving pan disposed under the food basket, a bottom of the food basket is provided with oil leakage holes, and the oil receiving pan is adapted to completely cover the oil leakage holes. By disposing the oil leakage holes at the bottom of the food basket and the oil receiving pan covering the oil leakage holes, excess oil in the food basket can be discharged into the oil receiving pan when the frying basket assembly is used for cooking, avoiding oil accumulation to affect the mouthfeel of the food, and also preventing excess oil from dripping or splashing to the external environment when the food is taken out after cooking, affecting the user experience.

In an optional embodiment, the flow guide is disposed at an outer edge of the oil receiving pan and is formed by the oil receiving pan extending upward. By integrally forming the oil receiving pan and the flow guide, not only can the structural integrity of the frying basket assembly be improved, but also the installation difficulty and production cost of the frying basket assembly can be effectively reduced.

In an optional embodiment, the oil receiving pan is adapted to enclose a receiving cavity open at a top and at a front with the flow guide, a buckle is disposed on the food basket, an inner wall of the receiving cavity is provided with a limiting structure that can be clamped to the buckle, and the food basket is adapted to be detachably suspended within the receiving cavity by the limiting structure and the buckle. By detachably suspending and fixing the food basket in the receiving cavity, not only can the structural integrity of the frying basket assembly during cooking be improved, but also it is convenient for users to disassemble, replace, and clean the oil receiving pan and the food basket after cooking, which can effectively improve the user experience.

In an optional embodiment, a side, facing the food basket, of the flow guide is provided with convex ribs, and the convex ribs are adapted to abut against a side wall of the food basket. The convex ribs are adapted to LIMIT and/or position the food basket, by means of the convex ribs, not only can the risk of falling due to sliding when the food basket is suspended be reduced, but also the installation difficulty of the food basket can also be effectively reduced.

In an optional embodiment, a bottom of the flow guide is adapted to be connected with the oil receiving pan, a top of the flow guide is adapted to extend to an upper part of the cooking cavity, and the top of the flow guide is provided with a handle extending to an outside of the cooking cavity. By extending the top of the flow guide to the upper part of the cooking cavity and disposing the handle at the top of the flow guide, it is easy to take and place the frying basket assembly, thereby improving the convenience of using the frying basket assembly.

In an optional embodiment, a top of the cooking cavity has a top opening, an outer edge of the top opening is provided with matching slots matched with the handle, and when the frying basket assembly is disposed within the cooking cavity, the handle is disposed within the matching slots, and a top of the handle is flush with tops of the matching slots. The matching slots are adapted to limit and/or position the handle, and by matching the handle with the matching slots, not only can the shaking of the frying basket assembly in the cooking cavity be reduced, but also the installation difficulty of the frying basket assembly can be effectively reduced; and at the same time, the handle is arranged in the matching slots, so that the handle can be hidden, thereby improving the overall aesthetic degree of the air fryer product.

In an optional embodiment, when the frying basket assembly is disposed within the cooking cavity, a bottom of the handle is adapted to abut against bottoms of the matching slots, and the frying basket assembly is adapted to be suspended within the cooking cavity by the handle. By suspending the frying basket assembly within the cooking cavity, not only can the circulating heat flow be used to heat the food in the frying basket assembly in all directions, but also the speed of heat flow circulation inside the cooking cavity can also be improved, thereby improving the cooking efficiency and the cooking effect.

In an optional embodiment, the top of the cooking cavity is provided with a top opening, a top cover that can be turned over to open and close the top opening is disposed at the top opening, and the top cover is provided with a window assembly corresponding to the frying basket assembly. By disposing the air fryer as a top flip structure in which the top cover can be turned over, the taking and placing of the frying basket assembly can be facilitated; and at the same time, the window assembly is disposed on the top cover so that the user can intuitively observe the cooking state of the food in the cooking cavity through the window assembly, thereby not only facilitating the user's cooking, but also effectively enhancing the user's cooking enjoyment and user experience.

The present application provides an air fryer with high heating efficiency, so as to solve the technical problems that the existing air fryer has a poor cooking effect, which easily causes a difference in cooking effect of the upper and lower parts of the food, resulting in poor user experience.

In order to solve the above technical problems, the present application provides an air fryer with high heating efficiency, including a pot body, a cooking cavity is formed in the pot body, a hot air cavity is disposed at an outer side of a rear portion of the cooking cavity, an air frying system is disposed in the hot air cavity, and ventilation holes are formed in a rear side wall, adjacent to the air frying system, of the cooking cavity; a frying basket assembly is removably disposed within the cooking cavity, the frying basket assembly includes a food basket, hot air gaps are formed between left and right side walls of the food basket and an inner wall of the cooking cavity, and the hot air gaps at least partially correspond to the ventilation holes; a rear side wall of the food basket is provided with air outlet holes at least partially corresponding to the ventilation holes; a front side wall of the food basket is provided with air inlet holes, and a front side wall of the cooking cavity is provided with a first flow guiding structure corresponding to the air inlet holes; and a heat flow generated by the air frying system enters the hot air gaps through the ventilation holes and is adapted to be guided into the food basket by the first flow guiding structure through the air inlet holes, and flows towards the air frying system through the air outlet holes. In the air fryer, the circulating heat flow generated by the air frying system can flow in a front-rear direction of the cooking cavity by disposing the air frying system at the rear side of the cooking cavity, thereby heating the food inside the food basket in multiple directions to avoid differential cooking of the food; and at the same time, by first introducing the circulating heat flow generated by the air frying system into the hot air gaps, and then guiding the heat flow in the hot air gaps into the food basket by the first flow guiding structure, the air fryer can not only avoid the problem that the circulating heat flow generated by the air frying system is directly blown into the food basket, resulting in excessively high temperature in the food basket and causing food burning, but also improve the cooking effect, thereby improving the user experience. In an optional embodiment, the first flow guiding structure includes a guiding portion protruding from the front side wall of the cooking cavity and a plurality of extension portions arranged at intervals, one ends of the extension portions are connected to the guiding portion and the other ends of the extension portions are adapted to extend towards an edge of the front side wall of the cooking cavity, a flow guiding region is adapted to be formed between two adjacent extension portions, the flow guiding regions correspond to at least part of the air inlet holes, and a heat flow in the hot air gap enters the flow guiding regions and is adapted to be blocked and collected by the extension portions and the guiding portion and is introduced into the food basket through the air inlet holes. The air fryer can achieve the introduction of the heat flow in the hot air gap into different positions of the food basket by the spaced flow guiding regions, thereby achieving multi-directional heating of the food, effectively enhancing the cooking effect.

In an optional embodiment, each extension portion has an arc-shaped structure, extension directions of the extension portions are adapted to be directed towards left and right side walls of the cooking cavity, respectively, facing the same direction, and the flow guiding region with a hemispherical shape is adapted to be formed between two adjacent extension portions, and a heat flow in the flow guiding regions is adapted to flow in a direction opposite to the extension directions of the extension portions. The extension portions are adapted to play a flow collecting role, and by disposing the extension portions as the arc-shaped structure, more heat flow can be collected and introduced into the food basket, thereby improving the food cooking efficiency. In an optional embodiment, both the guiding portion and the extension portions have a trapezoidal cross section with a small upper part and a large lower part. By arranging the cross sections of the extension portions and the guiding portions to be trapezoidal with a small upper part and a large lower part, not only is smooth introduction of the heat flow in the hot air gap into the food basket facilitated, but also diversion of the introduced heat flow can be achieved to avoid differential cooking of the food caused by concentrated introduction.

In an optional embodiment, the guiding portion is located in a middle of the front side wall of the cooking cavity, and a projection of the guiding portion on a front side wall of the food basket is located in a middle of the front side wall of the food basket. Disposing the guiding portion at the middle of the front side wall of the cooking cavity and corresponding to the middle of the front side wall of the food basket can achieve better introduction of the heat flow in the hot air gap into the food basket, improving the cooking efficiency of the food in the food basket.

In an optional embodiment, the extension portions are formed by the guiding portion extending outwardly, and the guiding portion and the extension portions and the front side wall of the cooking cavity are integrally formed. By integrally forming the guiding portion and the extension portions with the inner wall of the cooking cavity, the production process can be simplified and the production cost can be reduced.

In an optional embodiment, a frying plate is suspended inside the food basket, and the frying plate is provided with a plurality of small holes communicating an upper space with a lower space of the frying plate; and the air inlet holes are formed in a front side wall of the food basket above and below the frying plate, and the heat flow in the hot air gap is adapted to be guided into the upper space and the lower space of the frying plate by the first flow guiding structure through the air inlet holes. By suspending the frying plate within the food basket, and forming the air inlet holes in the front side wall of the food basket above and below the frying plate, the air fryer can realize that the heat flow in the hot air gap is respectively introduced into the upper space and the lower space of the frying plate through the first flow guiding structure, so that all-directional heating of the food in the food basket is achieved, effectively improving the cooking effect and the cooking efficiency of the food.

In an optional embodiment, a bottom of the frying plate is provided with a plurality of elongated guide grooves in parallel, the guide grooves are formed by the bottom of the frying plate being recessed upward, the guide grooves each have a front opening and a rear opening, the front openings correspond to at least part of the air inlet holes, and the rear openings correspond to at least part of the air outlet holes. The guide grooves are adapted to play a flow guide role, and a heat flow entering the food basket can flow from front to back through the guide grooves, thereby achieving heat flow circulation within the cooking cavity; and at the same time, the guide grooves can also improve the efficiency of heat flow circulation inside the cooking cavity, thereby improving the cooking efficiency.

In an optional embodiment, the ventilation holes include air return holes corresponding to the air outlet holes, a projection of the frying plate on the front side wall of the cooking cavity is located in a middle of the first flow guiding structure, and a projection of the frying plate on a rear side wall of the cooking cavity is located in a middle of the air return holes. By disposing the frying plate in the middle of the first flow guiding structure and corresponding to the air return holes, the efficiency of heat flow circulation in the cooking cavity can be greatly improved, thereby improving the cooking efficiency.

In an optional embodiment, the air frying system includes a heat circulation fan and a heat generating tube disposed in front of the heat circulation fan, an air guide cover is disposed between the heat circulation fan and the heat generating tube, and a flow guide channel is formed between the air guide cover and an inner wall of the hot air cavity, the flow guide channel is provided with a hot air outlet, and the hot air outlet is located at an edge of the air guide cover; a hot air inlet communicating with the flow guide channel and corresponding to the heat circulation fan is disposed in a middle of the air guide cover; and the ventilation holes include air return holes corresponding to the hot air inlet and hot air holes corresponding to the hot air outlet, and a heat flow within the food basket is adapted to flow out from the air outlet holes, passes through the air return holes, enters the flow guide channel from the hot air inlet, is guided to the hot air outlet by the flow guide channel, and flows into the cooking cavity from the hot air outlet through the hot air holes. By means of the air guide cover, the heat flow generated by the air frying system can not only be introduced into the hot air gap, so as to prevent the heat flow from directly blowing into the food basket, which causes the temperature in the food basket to be too high, causing food to be burnt, but also the heat flow entering the hot air cavity and the heat flow flowing out of the hot air cavity can be diverted to ensure the normal circulation of the heat flow.

The present application provides an air fryer with high heating efficiency, so as to solve the technical problems of the existing air fryer that the heating efficiency is low, the operation is cumbersome, and the user experience is poor.

In order to solve the above technical problems, the present disclosure provides an air fryer with high heating efficiency, including a fryer body, a cooking cavity disposed within the fryer body, a hot air cavity disposed outside a rear portion of the cooking cavity, and an air frying system disposed within the hot air cavity and configured to generate a circulating heat flow, wherein a side wall, adjacent to a side of the air frying system, of the cooking cavity is provided with ventilation holes used for allowing hot air to enter and exit and corresponding to the air frying system, and the ventilation holes include air return holes in a middle and hot air holes in outer edges of the air return holes; a frying basket assembly is removably disposed within the cooking cavity, the frying basket assembly includes a food basket, a rear side wall of the food basket is provided with air outlet holes corresponding to the air return holes, left and right side walls of the food basket are provided with air inlet holes, a hot air gap communicating with the hot air holes is formed between the left and right side walls of the food basket and an inner wall of the cooking cavity, and a circulating heat flow generated by the air frying system is adapted to enter the hot air gap from the hot air holes and enter the food basket from the air inlet holes at both sides of the food basket, flows out of the food basket from the air outlet holes, and flows back to the hot air cavity through the air return holes. **In** the present application, by arranging the air frying system at the side of the cooking cavity, and forming the air inlet holes and the air outlet holes for allowing hot air to enter or exit in the side wall of the food basket, not only can the top and bottom of the food inside the food basket be heated simultaneously by inlet and outlet air at the side, thereby improving the heating efficiency, but also the operation of turning over is avoided, effectively improving the user experience; and meanwhile, by disposing the air inlet holes and the air outlet holes at two sides and the rear side of the food basket, respectively, and the circulating heat flow generated by the air frying system enters the food basket from both sides of the food basket and flows out from the rear side of the food basket, which can avoid the mutual influence between the inlet and outlet air of the food basket, thereby increasing the efficiency of heat flow circulation in the food basket and thus improving the cooking efficiency. In an optional embodiment, a front side wall of the food basket has a closed structure, and the circulating heat flow entering the food basket from the air inlet holes is adapted to be blocked when flowing to the front side wall of the food basket and then flows out from the air outlet holes in the rear side wall of the food basket. By disposing the front side wall of the food basket as the closed structure, the food basket can have air return characteristics, which can effectively improve the efficiency of heat flow circulation within the food basket.

In an optional embodiment, the top of the cooking cavity has a top opening, a handle is disposed on both sides of the frying basket assembly, an outer edge of the top opening is provided with receiving grooves matched with the handle, and when the frying basket assembly is disposed within the cooking cavity, the handle is adapted to be disposed within the receiving grooves, and a top end of the handle is flush with top ends of the receiving grooves. By disposing the handle on both sides of the frying basket assembly, the frying basket assembly can be easily taken and placed, effectively improving the convenience of using the frying basket assembly; and at the same time, the receiving grooves matched with the handle are formed at the outer edge of the top opening of the cooking cavity, so that the handle can be hidden, thereby improving the overall aesthetic degree of the air fryer product.

In an optional embodiment, when the handle is disposed within the receiving grooves, a bottom of the handle is adapted to abut against bottoms of the receiving grooves, and the frying basket assembly is adapted to be suspended within the cooking cavity by the handle. Suspending the food basket within the cooking cavity by the handle facilitates the circulating heat flow generated by the air frying system to enter and exit the food basket to heat food within the food basket, thereby improving the cooking efficiency.

**In** an optional embodiment, the bottom of the food basket has a closed structure, a heat circulation air channel communicating the air return holes with the hot air gap is adapted to form between the bottom of the food basket and a bottom wall of the cooking cavity, and the circulating heat flow entering the hot air gap from the hot air holes at least partially flows back to the air return holes through the heat circulation air channel and enters the hot air cavity. By disposing the bottom of the food basket as the closed structure, the heat circulation air channel is formed between the bottom of the food basket and the bottom wall of the cooking cavity, and it is advantageous to allow an air flow not flowing into the food basket to better flow back into the hot air cavity through the air return holes, thereby improving the efficiency of heat flow circulation in the cooking cavity and thus improving the food heating efficiency.

**In** an optional embodiment, the food basket is provided with a receiving cavity, a bottom of the receiving cavity is provided with a second flow guiding structure protruding upward, the second flow guiding structure is adapted to correspond to at least part of the air inlet holes, and a circulating heat flow in the hot air gap enters the receiving cavity through the air inlet holes, is at least partially guided by the second flow guiding structure and flows towards a top of the receiving cavity. By disposing the second flow guiding structure at the bottom of the receiving cavity to guide the circulating heat flow to the top of the receiving cavity, the heat flow can better heat the food inside the receiving cavity, and not only can the cooking efficiency be improved, but also the cooking effect can be efficiently improved.

In an optional embodiment, the second flow guiding structure includes a plurality of wave-shaped flow guiding ribs formed by the bottom wall of the food basket being recessed upwards. By integrally forming the second flow guiding structure and the food basket, not only can the structural integrity of the food basket be improved, but also the installation difficulty and the production cost of the food basket can be effectively reduced.

In an optional embodiment, the second flow guiding structure includes a plurality of spaced flow guiding ribs protruding from the bottom wall of the receiving cavity and extending from an edge of the bottom wall of the receiving cavity to a middle of the bottom wall of the receiving cavity. By arranging the flow guiding ribs at intervals and extending toward the middle of the receiving cavity, the circulating heat flow can be guided to the middle of the receiving cavity, which not only improves the cooking efficiency, but also avoids regional differences in food cooking caused by regional accumulation of the circulating heat flow, thereby effectively improving the cooking effect.

In an optional embodiment, the cooking cavity has a top opening, a top cover through which the top opening can be opened and closed is disposed at the top opening, the top cover is provided with a visual area, and the visual area is provided with a visual component corresponding to the food basket. By disposing the visual component corresponding to the food basket on the top cover, the user can intuitively observe the cooking state of the food in the cooking cavity through the visual component, which not only improves the cooking enjoyment of the user, but also improves the user experience.

In an optional embodiment, one end of the top cover is adapted to be elastically hinged to the fryer body by means of an elastic hinge structure and the other side of the top cover is adapted to be clamped and connected to the fryer body by means of a clamping structure, and the top cover or the fryer body is provided with an unlocking member for separating the clamping structure from the fryer body. By providing the elastic hinge structure at a position where the top cover is connected to the fryer body, the top cover can be automatically turned over when the top opening is opened, thereby enhancing convenience of use and user experience of the air fryer; meanwhile, the clamping structure is adapted to play a limiting role, and the top cover is limited in a state in which the top opening is closed by the clamping structure, thereby ensuring normal cooking; and in addition, by separating the clamping structure from the fryer body through the unlocking member, the convenience of use of the air fryer product can be improved, the difficulty of operation of the air fryer product can be reduced, and the user experience can be improved.

Compared with the prior art, the beneficial effects of the present application are as follows:
in the present application, by respectively forming the air inlet holes and the air outlet holes on at least the front and rear side walls of the food basket, the circulating heat flow generated by the air frying system disposed on the side of the cooking cavity can enter and exit the food basket to cook food, effectively enhancing the applicability of the frying basket assembly and user experience; and at the same time, by disposing the flow guide between the food basket and the inner wall of the cooking cavity, the circulating heat flow generated by the air frying system is guided to the front side of the food basket, so that the circulating heat flow flows in from the front side of the food basket and flows out from the rear side of the food basket, the mutual influence between the inlet and outlet air of the food basket can be avoided, and the heat flow circulation efficiency and the cooking efficiency of the frying basket assembly can be effectively improved.

In the present application, by disposing the air frying system at the rear side of the cooking cavity, the circulating heat flow generated by the air frying system can flow in the front-rear direction of the cooking cavity, thereby heating the food inside the food basket in multiple directions, avoiding differential cooking of the food; at the same time, by first introducing the circulating heat flow generated by the air frying system into the hot air gap, and then guiding the heat flow in the hot air gap into the food basket by the first flow guiding structure, not only can the problem that the circulating heat flow generated by the air frying system is directly blown into the food basket, resulting in excessively high temperature in the food basket and causing food burning be avoided, but also the cooking effect can be improved, thereby improving the user experience; and in addition, by suspending the frying plate in the food basket and guiding the heat flow in the hot air gap into the upper space and the lower space of the frying plate through the second flow guiding structure, all-directional heating of the food in the food basket can be achieved, effectively improving the cooking effect and the cooking efficiency.

In order to make the objects, technical solutions and advantages of the embodiments of the present disclosure more clear, the technical solutions in the embodiments of the present disclosure will be clearly and completely described below in conjunction with the accompanying drawings in the embodiments of the present disclosure, and obviously, the described embodiments are a part of the embodiments of the present disclosure, rather than all of the embodiments. The components of the embodiments of the present disclosure generally described and illustrated in the accompanying drawings herein can be arranged and designed in a variety of different configurations.

Thus, the following detailed description of the embodiments of the present disclosure provided in the accompanying drawings is not intended to limit the scope of the present disclosure, but is merely representative of selected embodiments of the present disclosure. Based on the embodiments in the present disclosure, all other embodiments obtained by those of ordinary skill in the art without making inventive steps belong to the scope of protection of the present disclosure.

### Embodiment 1:

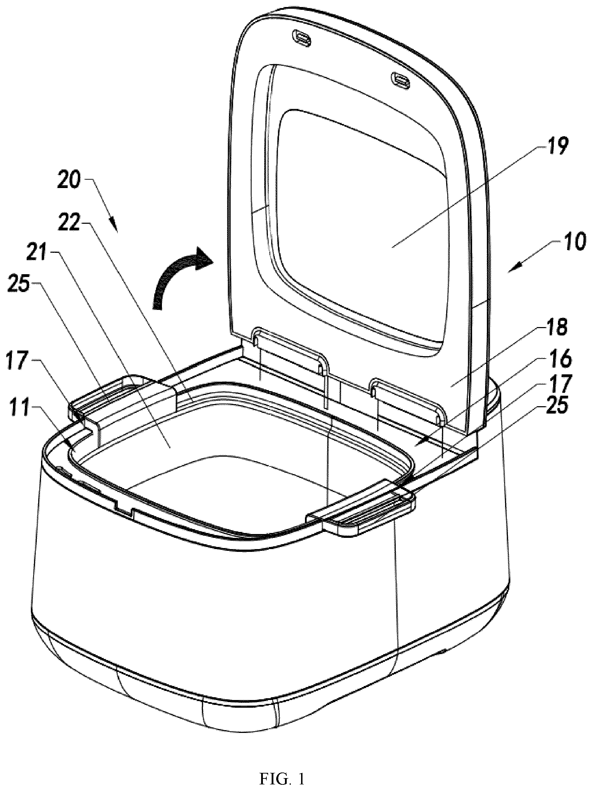

FIGS. 1 to 4 are schematic diagrams of a first embodiment of an air fryer with high heating efficiency according to the present invention. The air fryer includes a fryer body 10 provided with a cooking cavity 11, and a basket assembly 20 detachably disposed in the cooking cavity 11.

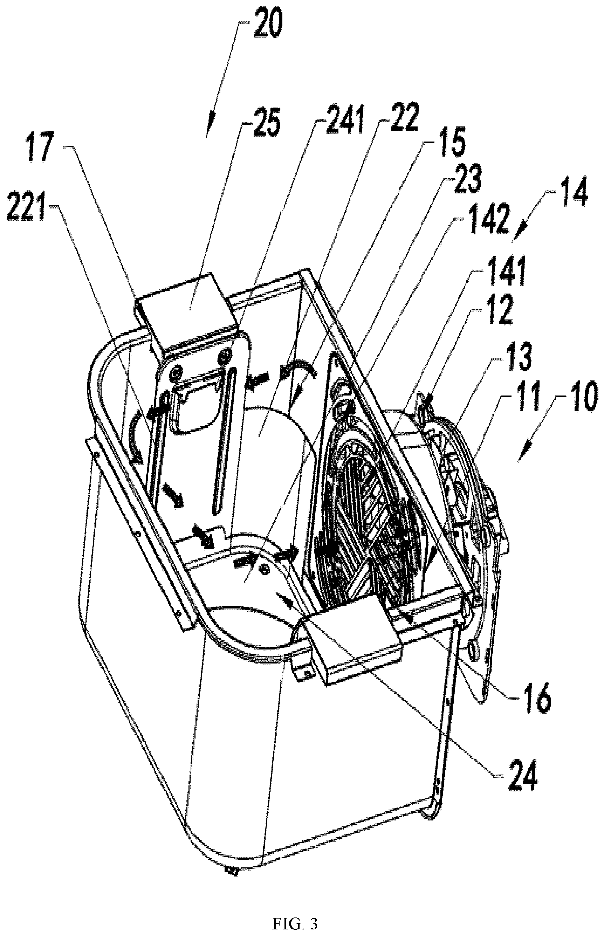

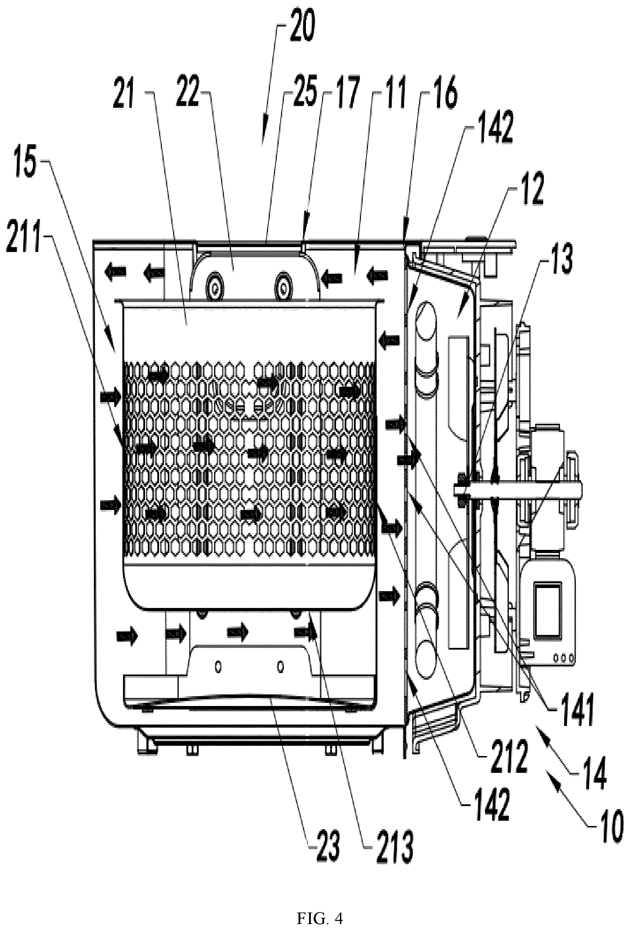

As shown in FIGS. 3 and 4, an outer side of a rear portion of the cooking cavity 11 is provided with a hot air cavity 12, the hot air cavity 12 is provided with an air frying system 13 configured to generate a circulating heat flow, a side wall, adjacent to a side of the air frying system 13, of the cooking cavity 11 is provided with ventilation holes 14 corresponding to the air frying system, the ventilation holes 14 include air return holes 141 in a middle and hot air holes 142 in outer edges of the air return holes 141, and a circulating heat flow generated by the air frying system 13 is adapted to enter the cooking cavity 11 from the hot air holes 142 and flows back to the hot air cavity 12 from the air return holes 141.

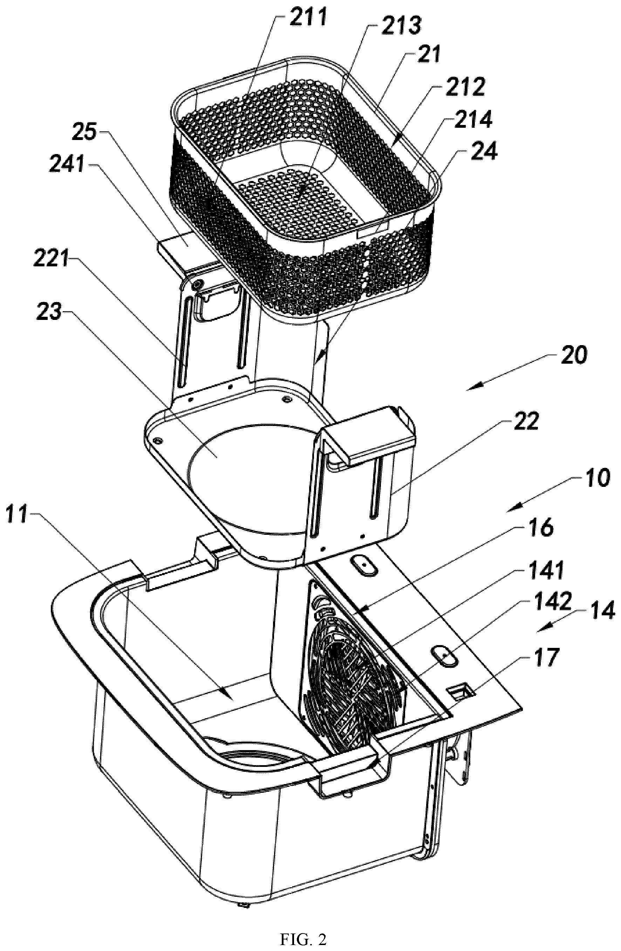

As shown in FIGS. 2 to 4, the frying basket assembly 20 includes a food basket 21 and a flow guide 22 disposed between the food basket 21 and an inner wall of the cooking cavity 11, at least front and rear side walls of the food basket 21 are respectively provided with air inlet holes 211 and air outlet holes 212, the air outlet holes 212 of the food basket 21 are adapted to correspond to the air return holes 141, and the flow guide 22 is adapted to extend from left and right sides of the food basket 21 to a rear side of the food basket 21; a heat circulation air channel 15 communicating with the hot air holes 142 is formed between the flow guide 22 and a side wall of the cooking cavity 11, and the circulating heat flow generated by the air frying system 13 enters the cooking cavity 11 through the hot air holes 142 and is adapted to be guided by the flow guide 22 into the heat circulation air channel 15 and flows to a front of the cooking cavity 11, enters the food basket 21 from the air inlet holes 211 at the front side of the food basket 21 and flows out from the air outlet holes 212 and flows back to the hot air cavity 12 through the air return holes 141. In the present application, by respectively forming the air inlet holes 211 and the air outlet holes 212 in at least the front and rear side walls of the food basket 21, the circulating heat flow generated by the air frying system 13 disposed on the side of the cooking cavity 11 can enter and exit the food basket 21 to cook food, effectively enhancing the applicability of the frying basket assembly 20 and user experience; and at the same time, by disposing the flow guide 22 between the food basket 21 and the inner wall of the cooking cavity 11, the circulating heat flow generated by the air frying system 13 is guided to the front side of the food basket 21, so that the circulating heat flow flows in from the front side of the food basket 21 and flows out from the rear side of the food basket 21, the mutual influence between the inlet and outlet air of the food basket 21 can be avoided, and the heat flow circulation efficiency and the cooking efficiency of the frying basket assembly 20 can be effectively improved.

As shown in FIGS. 2 and 3, the flow guide 22 is preferably a circular arc-shaped flow guide structure longitudinally disposed on both sides of the food basket 21, parallel to a side wall of the food basket 21, and extending from both sides of the food basket 21 to the rear side of the food basket 21. In the air fryer, by disposing the flow guide 22 as the circular arc-shaped flow guide structure, the wind resistance of the circulating heat flow flowing in the heat circulation air channel 15 can be effectively reduced, thereby improving the flow rate of the circulating heat flow and the cooking efficiency.

As shown in FIGS. 2 and 4, the frying basket assembly 20 further includes an oil receiving pan 23, preferably disposed under the food basket 21, the bottom of the food basket 21 is provided with oil leakage holes 213, and the oil receiving pan 23 is adapted to completely cover the oil leakage holes 213. In the air fryer, by disposing the oil leakage holes 213 at the bottom of the food basket 21 and the oil receiving pan 23 covering the oil leakage holes 213, excess oil in the food basket 20 can be discharged into the oil receiving pan 23 when the frying basket assembly 20 is used for cooking, avoiding oil accumulation to affect the mouthfeel of the food, and also preventing excess oil from dripping or splashing to the external environment when the food is taken out after cooking, affecting the user experience.

As shown in FIGS. 2 and 3, the flow guide 22 is preferably disposed at an outer edge of the oil receiving pan 23 and is formed by the oil receiving pan 23 extending upward. In the air fryer, by integrally forming the oil receiving pan 23 and the flow guide 22, not only can the structural integrity of the basket assembly 20 be improved, but also the installation difficulty and the production cost of the frying basket assembly 20 can be effectively reduced.

As shown in FIG. 2, the oil receiving pan 23 is further adapted to enclose a receiving cavity 24 open at a top and at a front with the flow guide 22, the food basket 21 is provided with a buckle 214, an inner wall of the receiving cavity 24 is provided with a limiting structure 241 that can be clamped to the buckle 214, and the food basket is adapted to be detachably suspended within the receiving cavity 24 by the limiting structure 241 and the buckle 214. In the air fryer, by detachably suspending and fixing the food basket 21 in the receiving cavity 24, not only can the structural integrity of the frying basket assembly 20 during cooking be improved, but also it is convenient for users to disassemble, replace, and clean the oil receiving pan and the food basket after cooking, which can effectively improve the user experience.

As shown in FIGS. 2 and 3, a side, facing the food basket 21, of the flow guide 22 is provided with convex ribs 221, and the convex ribs 221 are adapted to abut against the side wall of the food basket 21 when the food basket 21 is suspended in the receiving cavity 24. In the air fryer, the convex ribs 221 are adapted to play a limiting role, and by limiting the food basket 21 through the convex ribs 221, the risk of falling due to sliding when the food basket 21 is suspended can be reduced; and at the same time, the convex ribs 221 are also adapted to play a positioning role, and by positioning the food basket 21 through the convex ribs 221, the installation difficulty of the food basket 21 can be effectively reduced.

As shown in FIG. 3, the bottom of the flow guide 22 is adapted to be connected to the oil receiving pan 23, the top of the flow guide 22 is adapted to extend to an upper part of the cooking cavity 11, and the top of the flow guide 22 is provided with a handle 25 extending to the outside of the cooking cavity 11. By extending the top of the flow guide 22 to the upper part of the cooking cavity 11 and disposing the handle 25 at the top of the flow guide 22, the taking and placing of the frying basket assembly 20 can be facilitated, thereby improving the convenience of use of the frying basket assembly 20.

As shown in FIGS. 1 and 3, the top of the cooking cavity 11 has a top opening 16, an outer edge of the top opening 16 is provided with matching slots 17 matched with the handle 25, and when the frying basket assembly 20 is disposed within the cooking cavity 11, the handle 25 is adapted to be disposed within the matching slots 17, and a top of the handle 25 is adapted to be flush with tops of the matching slots 17. In the air fryer, the matching slots 17 are adapted to limit the handle 25, and by limiting the handle 25 through the matching slots 17, the frying basket assembly 20 is prevented from shaking left and right when the frying basket assembly 20 is disposed in the cooking cavity 11, and the structural fit stability of the air fryer can be effectively improved; at the same time, the matching slots 17 are also adapted to play a positioning role, and by positioning the handle 25 through the matching slots 17, the installation difficulty of the frying basket assembly 20 can be effectively reduced; and in addition, by disposing the handle 25 within the matching slots 17, it is also possible to hide the handle 25, thereby improving the overall aesthetic degree of the air fryer product.

As shown in FIG. 4, when the frying basket assembly 20 is disposed within the cooking cavity 11, the bottom of the handle 25 is adapted to abut against bottoms of the matching slots 17, and the frying basket assembly 20 is adapted to be suspended within the cooking cavity 11 by the handle. By suspending the frying basket assembly 20 within the cooking cavity 11, not only can the circulating heat flow be used to heat the food in the frying basket assembly 20 in all directions, but also the speed of heat flow circulation inside the cooking cavity 11 can also be improved, thereby improving the cooking efficiency and the cooking effect

As shown in FIG. 1, a top cover 18 that can be turned over to open and close the top opening 16 is disposed at the top opening 16 of the cooking cavity 11, and the top cover 18 is provided with a window assembly 19 corresponding to the frying basket assembly 20. The taking and placing of the frying basket assembly 20 can be facilitated by disposing the air fryer as a top flip structure in which the top cover 18 can be turned over; and at the same time, the window assembly 19 is disposed on the top cover 18 so that the user can intuitively observe the cooking state of the food in the cooking cavity 11 through the window assembly 19, thereby not only facilitating the user's cooking, but also effectively enhancing the user's cooking enjoyment and user experience.

### Embodiment 2:

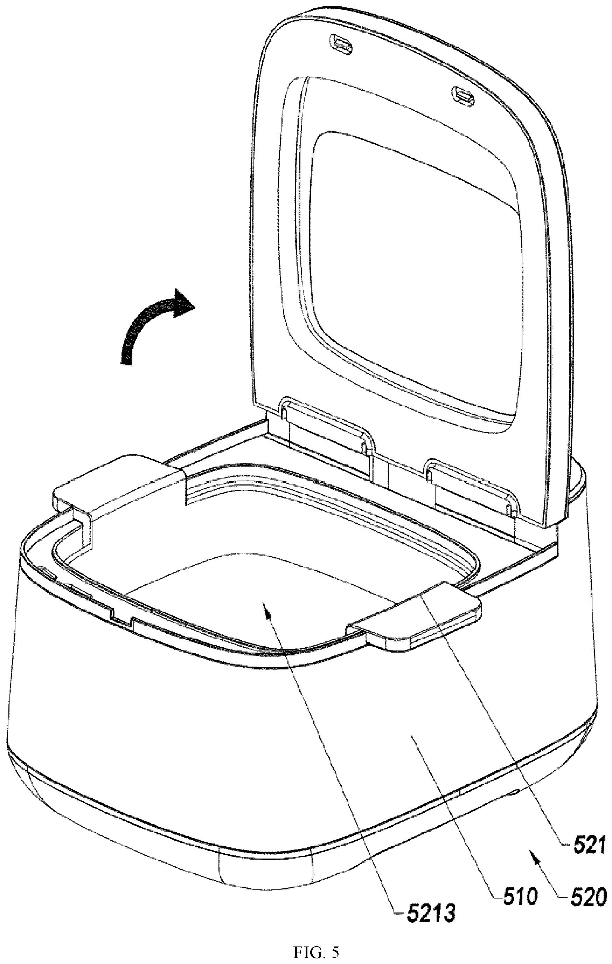

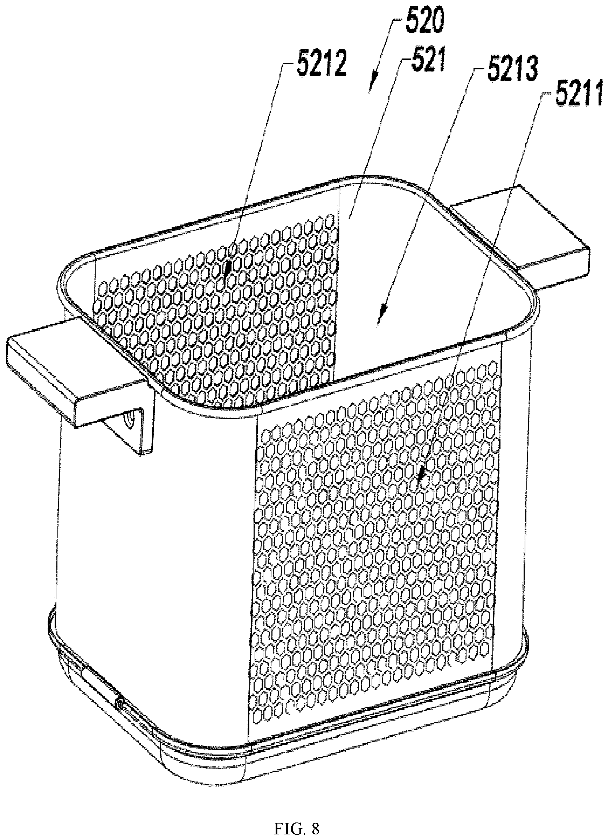

FIGS. 5 to 9 are schematic diagrams of a second embodiment of an air fryer with high heating efficiency according to the present invention. The air fryer includes a pot body 510 in which a cooking cavity 511 for cooking is formed and a frying basket assembly 520 detachably disposed in the cooking cavity 511.

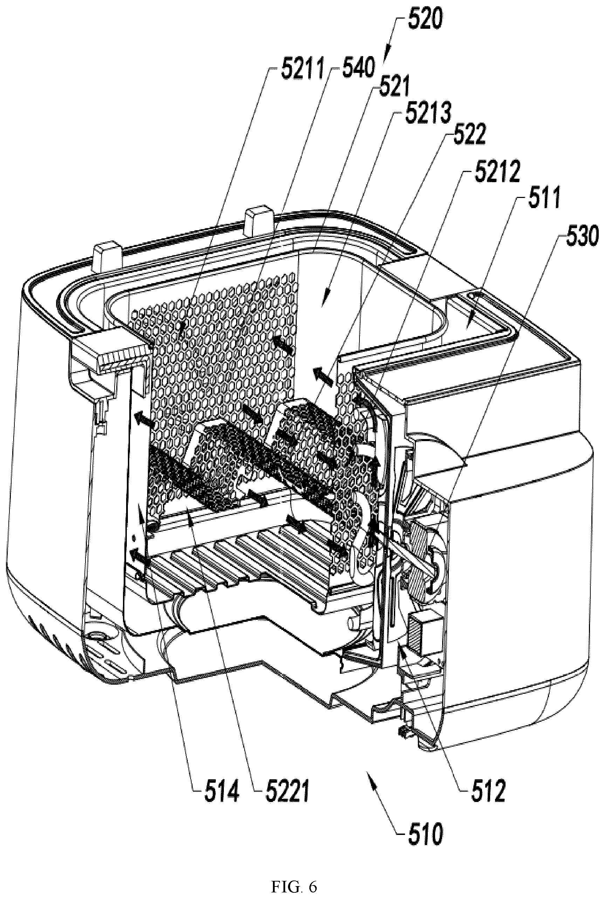

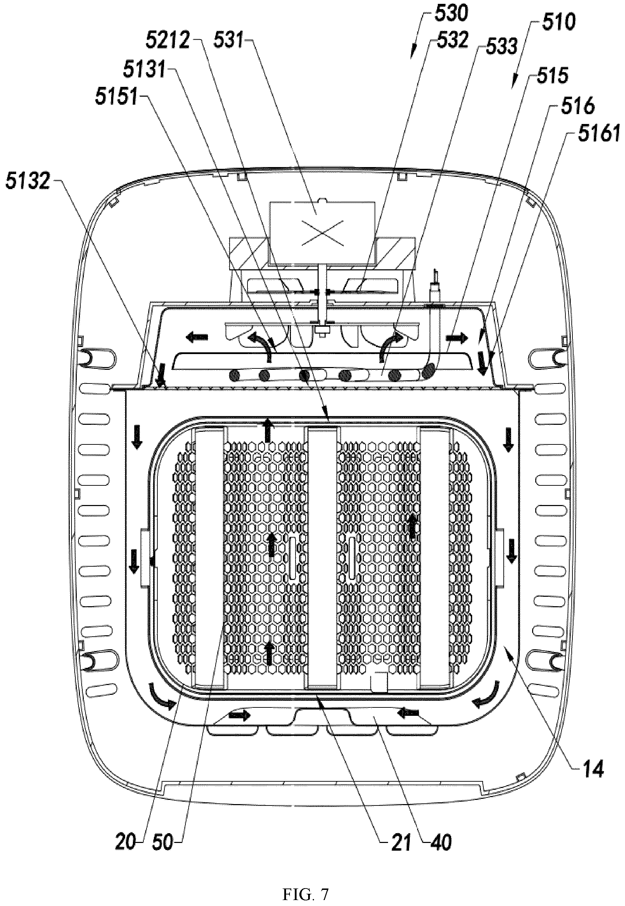

As shown in FIGS. 6 and 7, a hot air cavity 512 is disposed outside a rear portion of the cooking cavity 511, an air frying system 530 configured to generate a heat flow is disposed in the hot air cavity 512, ventilation holes 513 for allowing hot air to pass through are formed in a rear side wall, adjacent to the air frying system 530, of the cooking cavity 511, and a heat flow generated by the air frying system 530 is adapted to flow into the cooking cavity 511 through the ventilation holes 513 to heat food inside the cooking cavity 511.

As shown in FIGS. 6 to 9, the frying basket assembly 520 includes a food basket 521, hot air gaps 514 are formed between a left side wall, a right side wall and a front side wall of the food basket 521 and an inner wall of the cooking cavity 511, the hot air gaps 514 at least partially correspond to the ventilation holes 513, and a heat flow generated by the air frying system 530 is adapted to pass through the ventilation holes 513 and then flows into the hot air gaps 514; the front side wall of the food basket 521 is provided with air inlet holes 5211, a front side wall of the cooking cavity 511 is provided with a first flow guiding structure 540 corresponding to the air inlet holes 5211, the first flow guiding structure 540 is adapted to play a flow guide role, and the heat flow inside the hot air gaps 514 is adapted to be guided into the food basket 521 by the first flow guiding structure 540 through the air inlet holes 5211 to heat food inside the food basket 521; a rear side wall of the food basket 521 is provided with air outlet holes 5212, the air outlet holes 5212 at least partially correspond to the ventilation holes 513, and a heat flow in the food basket 521 flows out of the food basket 521 through the air outlet holes 5212 and is adapted to flow back into the hot air cavity 512 through the ventilation holes 513, and a circulating heat flow is formed in the cooking cavity 511 under the action of the air frying system 530 to circularly flow in the cooking cavity 511 so as to cook the food. In the air fryer, the circulating heat flow generated by the air frying system 530 can flow in a front-rear direction of the cooking cavity 511 by disposing the air frying system 530 at the rear side of the cooking cavity 511, thereby heating the food inside the food basket 521 in multiple directions to avoid differential cooking of the food; and at the same time, by first introducing the circulating heat flow generated by the air frying system 530 into the hot air gaps 514, and then guiding the heat flow in the hot air gaps 514 into the food basket 521 by the first flow guiding structure 540, the air fryer can not only avoid the problem that the circulating heat flow generated by the air frying system 530 is directly blown into the food basket, resulting in excessively high temperature in the food basket 521 and causing food burning, but also improve the cooking effect, thereby improving the user experience.

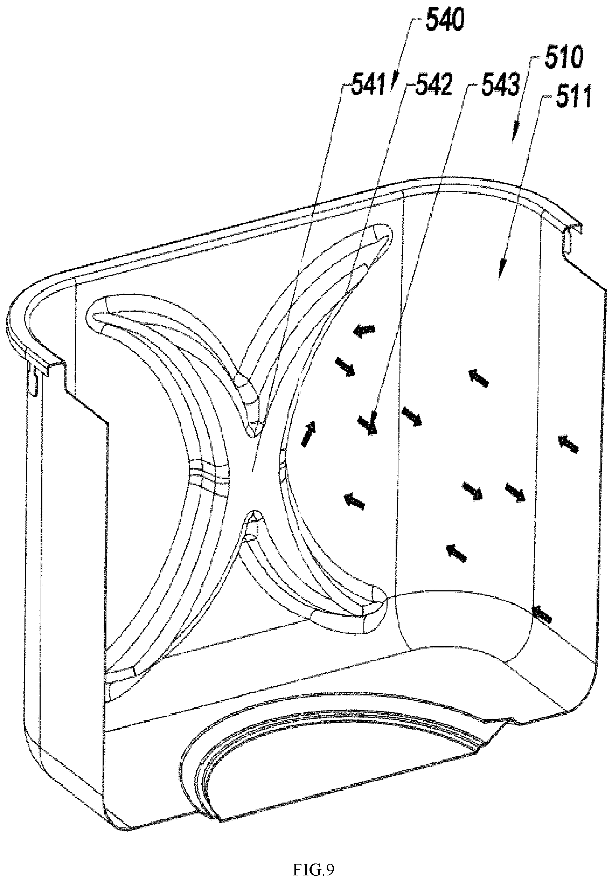

As shown in FIG. 9, the first flow guiding structure 540 includes a guiding portion 541 protruding from the front side wall of the cooking cavity 511 and a plurality of extending portions 542 arranged at intervals, one ends of the extension portions 542 are connected to the guiding portion 541, the other ends of the extension portions 542 are adapted to extend towards an edge of the front side wall of said cooking cavity 511, a flow guiding region 543 is adapted to be formed between two adjacent extension portions 542, the flow guiding regions 543 correspond to at least part of the air inlet holes 5211, and a heat flow in the hot air gaps 514 enters the flow guiding regions 543 and is adapted to be blocked and collected by the extension portions 542 and the guiding portion 541 and is introduced into the food basket 521 through the air inlet holes 5211. The air fryer can achieve the introduction of the heat flow in the hot air gaps 514 into different positions of the food basket 521 by the spaced flow guiding regions 543, thereby achieving multi-directional heating of the food, effectively enhancing the cooking effect.

As shown in FIG. 9, the first flow guiding structure 540 is preferably "X"-shaped, and each extension portion 542 preferably has an arc-shaped structure, extension directions of the extension portions 542 are adapted to be directed towards left and right side walls of the cooking cavity 511, respectively, facing the same direction, and the flow guiding region 543 with a hemispherical shape is adapted to be formed between two adjacent extension portions, and a heat flow in the flow guiding regions 543 is adapted to flow in a direction opposite to the extension directions of the extension portions 542. In the air fryer, the extension portions 542 is adapted to play a flow collecting role, and by disposing the extension portions 542 as the arc-shaped structure, flow collecting can be better performed, and more heat flow can be collected and introduced into the food basket 521, thereby improving the food cooking efficiency.

As shown in FIG. 9, in the first flow guiding structure 540, the extension portions 542 and the guiding portion 541 preferably have a certain draft angle, and airflow guiding can be controlled by controlling the draft angle of the extension portions 542 and the guiding portion 541; and in particular, as shown in FIG. 9, in an optional embodiment, both the guiding portion 541 and the extension portions 542 preferably have a trapezoidal cross section with a small upper part and a large lower part, and by disposing the cross sections of the extension portions 542 and the guiding portion 541 to be trapezoidal with a small upper part and a large lower part, not only is smooth introduction of the heat flow in the hot air gaps 514 into the food basket 521 facilitated, but also diversion of the introduced heat flow can be achieved to avoid differential cooking of the food caused by concentrated introduction.

In an optional embodiment, the guiding portion 541 is preferably located in the middle of the front side wall of the cooking cavity 511, and a projection of the guiding portion 541 on the front side wall of the food basket 521 is located in the middle of the front side wall of the food basket 521. Disposing the guiding portion 541 at the middle of the front side wall of the cooking cavity 511 and corresponding to the middle of the front side wall of the food basket 521 can achieve better introduction of the heat flow in the hot air gaps 514 into the food basket 521, improving the cooking efficiency of the food in the food basket 521.

As shown in FIG. 9, in the first flow guiding structure 540, the extension portions 542 are formed by the guiding portion 541 extending outwardly, and the guiding portion 541 and the extension portions 542 are adapted to be integrally formed with the front side wall of the cooking cavity 511. By integrally forming the guiding portion 541 and the extension portions 542 with the inner wall of the cooking cavity 511, the production process can be simplified and the production cost can be reduced.

As shown in FIG. 6, the food basket 521 is provided with a receiving cavity 523 with an open top, a frying plate 522 is suspended in the receiving cavity 523, and the frying plate 522 is provided with a plurality of small holes communicating an upper space with a lower space of the frying plate 522; and the front side wall of the food basket 521 above and below the frying plate 522 is provided with the air inlet holes 5211, and the heat flow in the hot air gaps 514 is adapted to be guided into the upper space and the lower space of the frying plate 522 by the first flow guiding structure 540 through the air inlet holes 5211. By suspending the frying plate 522 within the food basket 521, and forming the air inlet holes 5211 in the front side wall of the food basket 521 above and below the frying plate 522, the air fryer can realize that the heat flow in the hot air gaps 514 is respectively introduced into the upper space and the lower space of the frying plate 522 through the first flow guiding structure 540, so that all-directional heating of the food in the food basket 521 is achieved, effectively improving the cooking effect and the cooking efficiency of the food.

As shown in FIG. 6, the bottom of the frying plate 522 is provided with a plurality of elongated guide grooves 5211 in parallel, the guide grooves 5211 are preferably formed by the bottom of the frying plate 522 being recessed upward, the guide grooves 5221 each have a front opening and a rear opening, the front openings correspond to at least part of the air inlet holes 5211 and the rear openings correspond to at least part of the air outlet holes 5212. In the air fryer, the guide grooves 5221 are adapted to play a flow guide role, and a heat flow entering the food basket 521 can flow from front to back through the guide grooves 5221, thereby achieving heat flow circulation within the cooking cavity 511; and at the same time, the guide grooves 5221 can also improve the efficiency of heat flow circulation inside the cooking cavity 511, thereby improving the cooking efficiency.

As shown in FIG. 7, the air frying system 530 includes a driving motor 531, a heat circulation fan 532 connected to the driving motor 531, and a heat generating tube 533 disposed in front of the heat circulation fan 532, the heat generating tube 533 is adapted to heat air, and the driving motor 531 is adapted to drive the heat circulation fan 532 to rotate, thereby driving the heated air to flow to form a heat flow; an air guide cover 515 is disposed between the heat circulation fan 532 and the heat generating tube 533, a flow guide channel 516 is formed between the air guide cover 515 and an inner wall of the hot air cavity 512, the flow guide channel 516 is provided with a hot air outlet 5161, and the hot air outlet 5161 is located at an edge of the air guide cover 515; and a hot air inlet 5151 communicating with the flow guide channel 516 and corresponding to the heat circulation fan 532 is disposed in a middle of the air guide cover 515, and air heated by the heat generating tube 533 is adapted to flow into the flow guide channel 516 from the hot air inlet 5151 under the driving of the heat circulation fan 532, is guided to the hot air outlet 5161 by the flow guide channel 516, and flows into the hot air gaps 514 from the hot air outlet 5161 through the ventilation holes 513.

As shown in FIG. 7, the ventilation holes 513 include air return holes 5131 at the middle of the rear side wall of the cooking cavity 511 and hot air holes 5132 at the periphery of the air return holes 5131, both sides of the air return holes 5131 are adapted to correspond to the hot air inlet 5151 and the air outlet holes 5212, respectively, both sides of the hot air holes 5132 are adapted to correspond to the hot air outlet 5161 and the hot air gaps 514, respectively, the heat flow generated by the air frying system 530 is adapted to enter the hot air gaps 514 through the hot air holes 5132, and is guided into the food basket 521 by the first flow guiding structure 540 through the air inlet holes 5211, and the heat flow inside the food basket 521, after flowing through the receiving cavity 523, is adapted to flow out from the air outlet holes 5212, and enters the flow guide channel 516 from the hot air inlet 5151 through the air return holes 5131, is guided to the hot air outlet 5161 by the flow guide channel 516, and flows into the hot air gaps 514 again from the hot air outlet 5161 through the hot air holes 5132 to form a circulating heat flow. By means of the air guide cover 515, the air fryer can not only achieve introduction of the heat flow generated by the air frying system 530 into the hot air gaps 514, so as to prevent the heat flow from directly blowing into the food basket 521, which causes the temperature in the food basket 521 to be too high, causing food to be burnt, but also the heat flow entering the hot air cavity 512 and the heat flow flowing out of the hot air cavity 512 can be diverted to ensure the normal circulation of the heat flow.

As shown in FIG. 6, in the air fryer, a projection of the frying plate 522 on the front side wall of the cooking cavity 511 is preferably located at the middle of the first flow guiding structure 540, and a projection of the frying plate 522 on the rear side wall of the cooking cavity 511 is preferably located at the middle of the air return holes 5131. By arranging the frying plate 522 at the middle of the first flow guiding structure 540 and corresponding to the return air hole 5131, the efficiency of heat flow circulation in the cooking cavity 511 can be greatly improved, thereby improving the cooking efficiency.

### Embodiment 3:

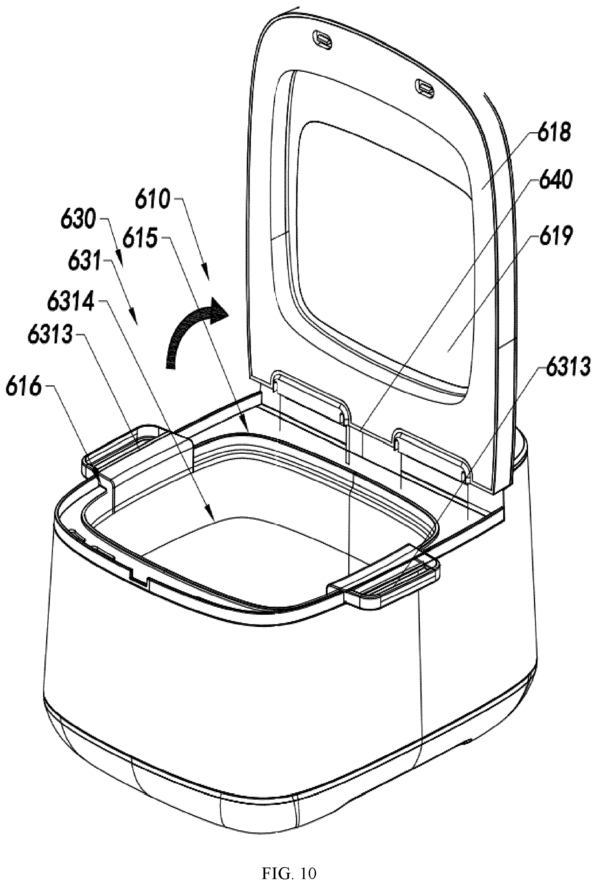

FIGS. 10 to 14 are schematic diagrams of a third embodiment of an air fryer with high heating efficiency according to the present disclosure. The air fryer includes a fryer body 610, a cooking cavity 611 disposed in the fryer body 610 and configured to place food to be cooked, a hot air cavity 612 disposed outside a rear portion of the cooking cavity 611, and an air frying system 620 disposed in the hot air cavity 612 and configured to generate a circulating heat flow, a side wall, adjacent to a side of the air frying system 620, of the cooking cavity 611 is provided with ventilation holes 613 for allowing hot air to enter and exit and corresponding to the air frying system 620, and a circulating heat flow generated by the air frying system 620 is adapted to enter and exit the cooking cavity 611 through the ventilation holes 613 to cook food inside the cooking cavity 611.

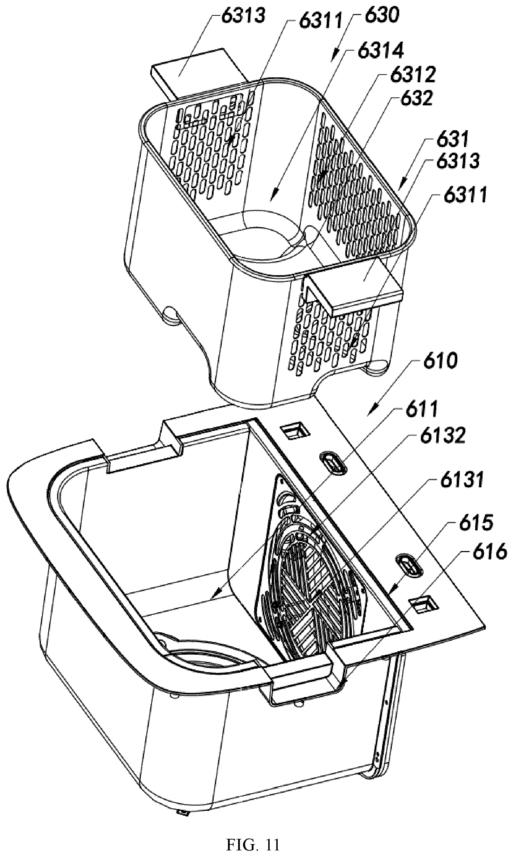

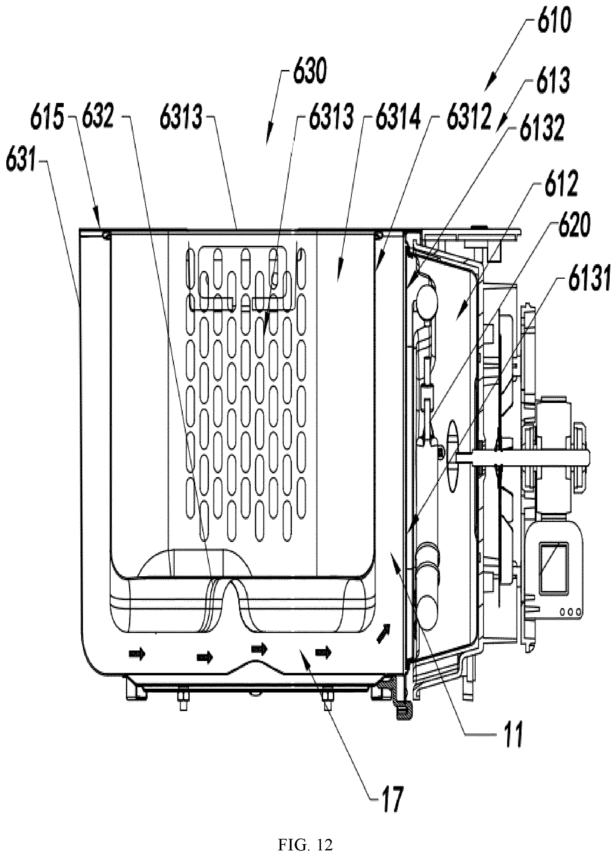

As shown in FIGS. 11 and 12, the ventilation holes 613 include air return holes 6131 in the middle and hot air holes 6132 in outer edges of the air return holes 6131; a frying basket assembly 630 is detachably disposed within the cooking cavity 611, the frying basket assembly 630 includes a food basket 631, air outlet holes 6312 corresponding to the air return holes 6131 are formed in a rear side wall of the food basket 631, air inlet holes 6311 are formed in both left and right side walls of the food basket 631, a hot air gap 614 communicating with the hot air holes 6132 is formed between the left and right side walls of the food basket 631 and an inner wall of the cooking cavity 611, and the circulating heat flow generated by the air frying system 620 is adapted to enter the hot air gap 614 from the hot air holes 6132 and enter the food basket 631 from the air inlet holes 6311 at both sides of the food basket 631, then flows out of the food basket 631 from the air outlet holes 6312 and flow back to the hot air cavity 612 through the air return holes 6131. In the present application, by arranging the air frying system 620 at the side of the cooking cavity 611, and forming the air inlet holes 6311 and the air outlet holes 6312 for allowing hot air to enter and exit in the side wall of the food basket 631, not only can the top and bottom of the food inside the food basket 631 be heated simultaneously by inlet and outlet air at the side, thereby improving the heating efficiency, but also the operation of turning over is avoided, effectively improving the user experience; and meanwhile, by disposing the air inlet holes 6311 and the air outlet holes 6312 at two sides and the rear side of the food basket 631, respectively, and the circulating heat flow generated by the air frying system 620 enters the food basket 631 from both sides of the food basket 631 and flows out from the rear side of the food basket 631, which can avoid the mutual influence between the inlet and outlet air of the food basket 631, thereby increasing the efficiency of heat flow circulation in the food basket 631 and thus improving the cooking efficiency.

As shown in FIGS. 11, 13 and 14, in an optional embodiment, a front side wall of the food basket 631 has a closed structure, and the circulating heat flow entering the food basket 631 from the air inlet holes 6311 is adapted to be blocked when flowing to the front side wall of the food basket 631 and then flows out from the air outlet holes 6312 in the rear side wall of the food basket 631. By disposing the front side wall of the food basket 631 as the closed structure, the food basket 631 can have air return characteristics, which can effectively improve the efficiency of heat flow circulation within the food basket 631.

As shown in FIGS. 10 and 11, the top of the cooking cavity 611 has a top opening 615, and a handle 6313 is disposed on both sides of the food basket 631, and an outer edge of the top opening 615 is provided with receiving grooves 616 matched with the handle 6313, and when the food basket 631 is disposed in the cooking cavity 611, the handle 6313 is adapted to be disposed in the receiving grooves 616, and a top end of the handle 6313 is flush with top ends of the receiving grooves 616. In the air fryer, the taking and putting of the food basket 631 can be facilitated by disposing the handle 6313 on both sides of the food basket 631, effectively improving the convenience of use of the food basket 631; and at the same time, the receiving grooves 616 matched with the handle 6313 are disposed at the outer edge of the top opening 615 of the cooking cavity 611, so that the handle 6313 can be hidden, thereby improving the overall aesthetic degree of the air fryer product.

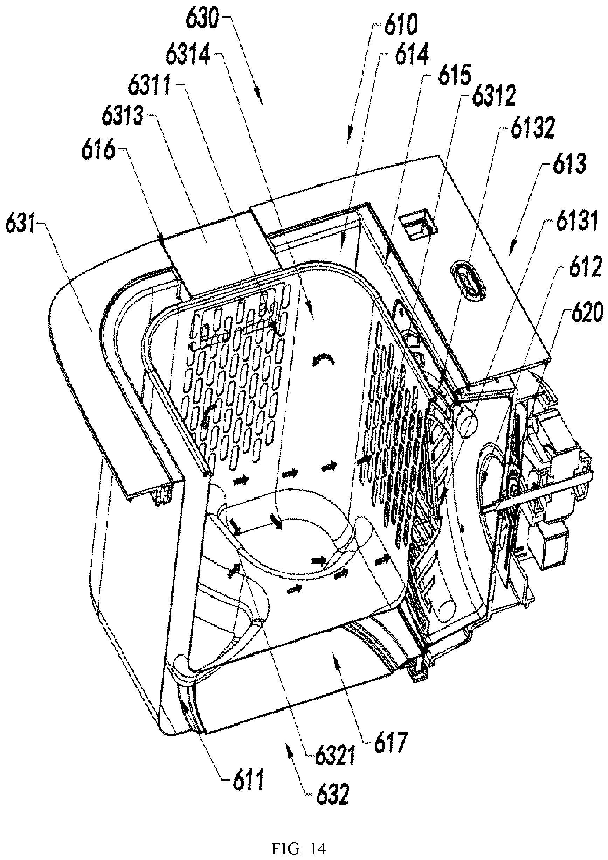

As shown in FIGS. 12 and 14, when the handle 6313 is disposed in the receiving grooves 616, a bottom of the handle 6313 is adapted to abut against bottoms of the receiving grooves 616, and the food basket 631 is adapted to be suspended in the cooking cavity 611 by the handle 6313. Suspending the food basket 631 within the cooking cavity 611 by the handle 6313 facilitates the circulating heat flow generated by the air frying system 620 to enter and exit the food basket 631 to heat the food within the food basket 631, thereby improving the cooking efficiency.

As shown in FIGS. 12 and 14, in an optional embodiment, a bottom of the food basket 631 has a closed structure, a heat circulation air channel 617 communicating the air return holes 6131 with the hot air gap 614 is adapted to form between the bottom of the food basket 631 and a bottom wall of the cooking cavity 611, and the circulating heat flow entering the hot air gap 614 from the hot air holes 6132 at least partially flows back to the air return holes 6131 through the heat circulation air channel 617 and enters the hot air cavity 612. By disposing the bottom of the food basket 631 as the closed structure, the heat circulation air channel 617 is formed between the bottom of the food basket 631 and the bottom wall of the cooking cavity 611, and it is advantageous to allow an air flow not flowing into the food basket 631 to better flow back into the hot air cavity 612 through the air return holes 6131, thereby improving the efficiency of heat flow circulation in the cooking cavity 611 and thus improving the food heating efficiency.

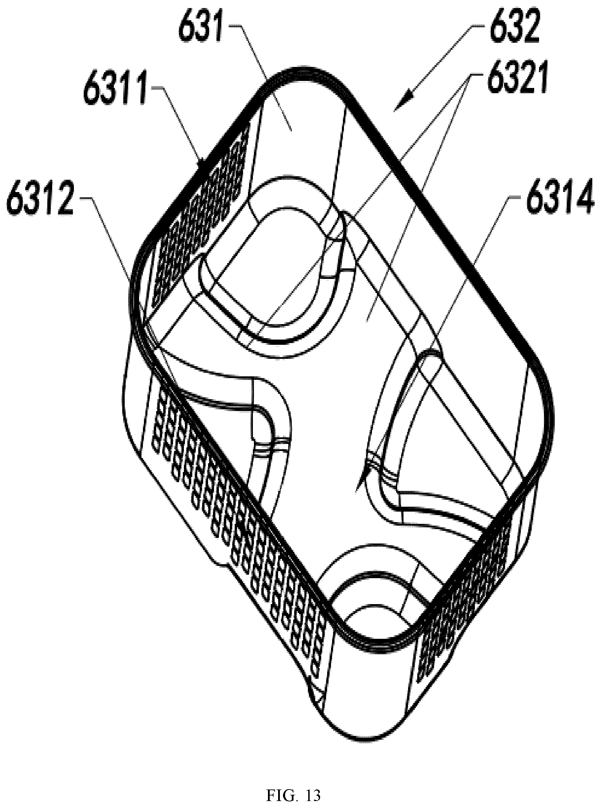

As shown in FIGS. 13 and 14, the food basket 631 is provided with a receiving cavity 6314, a bottom of the receiving cavity 6314 is provided with a second flow guiding structure 632 protruding upward, the second flow guiding structure 632 is adapted to correspond to at least part of the air inlet holes 6311, and a circulating heat flow in the hot air gap 614 enters the receiving cavity 6314 through the air inlet holes 6311, is at least partially guided by the second flow guiding structure 632 and flows towards a top of the receiving cavity 6314. By disposing the second flow guiding structure 632 at the bottom of the receiving cavity 6314 to guide the circulating heat flow to the top of the receiving cavity 6314, the heat flow can better heat the food inside the receiving cavity 6314, and not only can the cooking efficiency be improved, but also the cooking effect can be efficiently improved.

As shown in FIGS. 13 and 14, the second flow guiding structure 632 includes a plurality of wave-shaped flow guiding ribs 6321 adapted to be formed by the bottom wall of the food basket 631 being recessed upwards. By integrally forming the second flow guiding structure 632 with the food basket 631, not only can the structural integrity of the food basket 631 be improved, but also the installation difficulty and the production cost of the food basket 631 can be effectively reduced.

As shown in FIGS. 13 and 14, in an optional embodiment, the plurality of the flow guiding ribs 6321 are preferably disposed at the bottom of the receiving cavity 6314 at intervals and extend from the edge of the bottom wall of the receiving cavity 6314 to the middle of the bottom wall of the receiving cavity 6314. By arranging the flow guiding ribs 6321 at intervals and extending toward the middle of the receiving cavity 6314, it is possible to guide the circulating heat flow toward the middle of the receiving cavity 6314, and not only can the cooking efficiency be improved, but also regional differences in food cooking caused by regional accumulation of the circulating heat flow can be avoided, thereby effectively improving the cooking effect.

As shown in FIG. 10, a top cover 618 through which the top opening 615 can be opened and closed is disposed at the top opening 615 of the cooking cavity 611, the top cover 618 is provided with a visual area, and the visual area is provided with a visual component 619 corresponding to the food basket. By disposing the visual component 619 corresponding to the food basket on the top cover 618, the user can intuitively observe the cooking state of the food in the cooking cavity 611 through the visual component 619, which can not only improve the cooking enjoyment of the user, but also improve the user experience.

As shown in FIG. 10, one end of the top cover 618 is adapted to be elastically hinged to the fryer body 610 by an elastic hinge structure 640, and the other side of the top cover 618 is adapted to be clamped and connected to the fryer body 610 by means of a clamping structure, and the top cover 618 or the fryer body 610 is provided with an unlocking member for separating the clamping structure from the fryer body 610. By providing the elastic hinge structure 640 at a position where the top cover 618 is connected to the fryer body 610, the top cover 618 can be automatically turned over when the top opening 615 is opened, thereby enhancing convenience of use and user experience of the air fryer; meanwhile, the clamping structure is adapted to play a limiting role, and the top cover 618 is limited in a state in which the top opening 615 is closed by the clamping structure, thereby ensuring normal cooking; and in addition, by separating the clamping structure from the fryer body 610 through the unlocking member, the convenience of use of the air fryer product can be improved, the difficulty of operation of the air fryer product can be reduced, and the user experience can be improved.

It should be noted that the terms used herein are for the purpose of describing specific embodiments only and are not intended to limit exemplary embodiments according to the present disclosure. As used herein, the singular forms are intended to include the plural forms as well, unless the context clearly indicates otherwise. Furthermore, it should also be understood that the terms "comprising" and/or "including", when used in this specification, indicate the presence of features, steps, operations, devices, components, and/or combinations thereof.

Relative arrangements, numerical expressions, and numerical values of the components and steps described in these embodiments do not limit the scope of the present disclosure unless specifically stated otherwise. At the same time, it should be understood that for convenience of description, the dimensions of the parts shown in the drawings are not drawn to an actual scale. Techniques, methods, and apparatus known to those of ordinary skill in the relevant art may not be discussed in detail, but where appropriate, should be considered part of the authorized specification. In all of the examples shown and discussed herein, any specific values should be interpreted as merely exemplary, and not as limiting. Accordingly, other examples of exemplary embodiments may have different values. It should be noted that like reference numerals and letters denote like items in the following figures, and therefore, once an item is defined in one figure, it need not be further discussed in subsequent figures.

In the description of the present disclosure, it should be understood that the orientation or positional relationship indicated by orientation words such as "front, back, up, down, left, right," "transverse, vertical, perpendicular, horizontal," and "top, bottom," and the like are generally based on the orientation or positional relationship shown in the drawings, merely for convenience of describing the present disclosure and for simplicity of description, and unless otherwise stated, the orientation words do not indicate or imply that the device or element referred to must have a particular orientation or be constructed and operated in a particular orientation, and therefore are not to be construed as limiting the scope of protection of the present disclosure; and the orientation words "inside and outside" refer to inside and outside with respect to the contour of each component itself.

For ease of description, spatially relative terms such as "on top of", "over", "on the upper surface", "above", and the like may be used herein to describe the spatial positional relationship between one device or feature and other devices or features as illustrated in the figures. It should be understood that the spatially relative terms are intended to encompass different orientations of the device in use or operation in addition to the orientation depicted in the figures. For example, if the devices in the figures are inverted, devices described as "above" or "over" other devices or constructions would then be positioned "below" or "beneath" the other devices or constructions.

Thus, the exemplary term "above" can include both orientations of "above" and "below." The device can also be positioned in other different ways (rotated by 90 degrees or at other orientations) and the spatially relative depictions used herein are interpreted accordingly.

In addition, it should be noted that the use of the terms "first", "second", and the like to define components is merely for ease of distinguishing between the corresponding components, and if not otherwise stated, the terms have no special meaning and therefore should not be interpreted to limit the scope of protection of the present disclosure.

The air fryer with high heating efficiency provided by the present disclosure has been described in detail above, the principles and embodiments of the present disclosure have been described herein with reference to specific examples, the description of the above embodiments is provided only to help understand the method of the present disclosure and its core idea; and meanwhile, variations will be made to the specific embodiments and the scope of application by those of ordinary skill in the art in view of the idea of the present disclosure. In summary, the contents of this specification should not be construed as limiting the present disclosure.

### Industrial applicability

In the air fryer in this example, by disposing the air frying system at the rear side of the cooking cavity, and respectively disposing the air inlet holes and the air outlet holes in at least the front and rear side walls of the food basket, the circulating heat flow generated by the air frying system can flow in the front-rear direction of the cooking cavity, thereby heating the food inside the food basket in multiple directions, not only can differentiated cooking of the food be effectively avoided, and the cooking effect of the food be improved, but also the heating efficiency can be effectively improved, the operation of turning over is avoided, and the user experience can be improved; at the same time, by forming the hot air gap between the frying basket assembly and the inner wall of the cooking cavity to direct the circulating heat flow generated by the air frying system to the front side of the food basket, the circulating heat flow flows in from the front side of the food basket, and flows out from the rear side of the food basket, which can not only avoid the mutual influence between inlet and outlet air of the food basket, thereby improving the cooking efficiency, but also prevent the circulating heat flow generated by the air frying system from directly blowing into the food basket, thereby causing the problem that the temperature in the food basket is too high, causing food to be burnt, effectively improving the cooking effect and the user experience.

## Claims

1. An air fryer with high heating efficiency, comprising a fryer body (10, 610), a cooking cavity (11, 511, 611) disposed within the fryer body (10, 610), a hot air cavity (12, 51, 612) disposed outside a rear portion of the cooking cavity (11, 511, 611), and an air frying system (13, 530, 620) disposed within the hot air cavity (12, 51, 612) and configured to generate a circulating heat flow, a frying basket assembly (20, 520, 630) is removably disposed within the cooking cavity (11, 511, 611), the frying basket asembly (20, 520, 630) comprises a food basket (21, 521, 631) and a flow guide (22) disposed between the food basket (21, 521, 631) and an inner wall of the cooking cavity (11, 511, 631), and the flow guide (22) is adapted to extend from left and right sides of the basket (21, 521, 631) to a rear of the food basket (21, 521, 631), **characterized in that** a side wall, adjacent to a side of the air frying system (13, 530, 620), of the cooking cavity (11, 511, 611) is provided with ventilation holes (14, 513, 613) corresponding to the air frying system (13, 530, 620), and the ventilation holes (14, 513, 613) comprise air return holes (141, 5131, 6131) in a middle and hot air holes (142, 5132, 6132) in outer edges of the air return holes (141, 5131, 6131); at least front and rear side walls of the food basket (21, 521, 631) are respectively provided with air inlet holes (211, 5211, 6311) and air outlet holes (212, 5212, 6312), the air outlet holes (212, 5212, 6312) of the food basket (21, 521, 631) correspond to the air return holes (141, 5131, 6131), and a heat circulation air channel (15) communicating with the hot air holes (142, 5132, 6132) is formed between the flow guide (22) and a side wall of the cooking cavity (11, 511, 611), and a circulating heat flow generated by the air frying system (13, 530, 620) enters the cooking cavity (11, 511, 611) through the hot air holes (142, 5132, 6132) and is adapted to be guided by the flow guide (22) into the heat circulation air channel (15) and flows to a front of the cooking cavity (11, 511, 611), enters the food basket (21, 521, 631) from the air inlet holes (211, 5211, 6311) at the front side of the food basket (21, 521, 631) and flows out from the air outlet holes (212, 5212, 6312) and flows back to the hot air cavity (12, 51, 612) through the air return holes (141, 5131, 6131).

2. The air fryer with high heating efficiency according to claim 1, **characterized in that** the flow guide (22) is a circular arc-shaped flow guide structure longitudinally disposed on both sides of the food basket (21, 521, 631), parallel to a side wall of the food basket (21, 521, 631), and extending from both sides of the food basket (21, 521, 631) to the rear side of the food basket (21, 521, 631);
further, the frying basket assembly (20, 520, 630) further comprises an oil receiving pan (23) disposed under the food basket (21, 521, 631), a bottom of the food basket (21, 521, 631) is provided with oil leakage holes (213), and the oil receiving pan (23) is adapted to completely cover the oil leakage holes (213); and
further, the flow guide (22) is disposed at an outer edge of the oil receiving pan (23) and is formed by the oil receiving pan (23) extending upward.

3. The air fryer with high heating efficiency according to claim 2, **characterized in that** the oil receiving pan (23) is adapted to enclose a receiving cavity (24) open at a top and at a front with the flow guide (22), a buckle (214) is disposed on the food basket (21, 521, 631), an inner wall of the receiving cavity (24) is provided with a limiting structure (241) that can be clamped to the buckle (214), the food basket (21, 521, 631) is adapted to be detachably suspended within the receiving cavity (24) by the limiting structure (241) and the buckle (214), a side, facing the food basket (21, 521, 631), of the flow guide (22) is provided with convex ribs (221), and the convex ribs (221) are adapted to abut against a side wall of the food basket (21, 521, 631).

4. The air fryer with high heating efficiency according to claim 2, **characterized in that** a bottom of the flow guide (22) is adapted to be connected with the oil receiving pan (23), a top of the flow guide (22) is adapted to extend to an upper part of the cooking cavity (11, 511, 611), and the top of the flow guide (22) is provided with a handle (25) extending to an outside of the cooking cavity (11, 511, 611), a top of the cooking cavity (11, 511, 611) has a top opening (16), an outer edge of the top opening (16) is provided with matching slots (17) matched with the handle (25), when the frying basket assembly (20, 520, 630) is disposed within the cooking cavity (11, 511, 611), the handle (25) is disposed within the matching slots (17), and a top of the handle (25) is flush with tops of the matching slots (17), and when the frying basket assembly (20, 520, 630) is disposed within the cooking cavity (11, 511, 611), a bottom of the handle (25) is adapted to abut against bottoms of the matching slots (17), and the frying basket assembly (20, 520, 630) is adapted to be suspended within the cooking cavity (11, 511, 611) by the handle (25).

5. The air fryer with high heating efficiency according to claim 1, **characterized in that** a top of the cooking cavity (11, 511, 611) is provided with a top opening (16), a top cover (18) that can be turned over to open and close the top opening (16) is disposed at the top opening (16), and the top cover (18) is provided with a window assembly (19) corresponding to the frying basket assembly (20, 520, 630).

6. The air fryer with high heating efficiency according to claim 1, **characterized in that** a first flow guiding structure (540) corresponding to the air inlet holes (211, 5211, 6311) is disposed on a front side wall of the cooking cavity (11, 511, 611); and a heat flow generated by the air frying system (13, 530, 620) is guided to the air inlet holes (211, 5211, 6311) by the first flow guiding structure (540).

7. The air fryer with high heating efficiency according to claim 6, **characterized in that** the first flow guiding structure (540) comprises a guiding portion (541) protruding from the front side wall of the cooking cavity (11, 511, 611) and a plurality of extension portions (542) arranged at intervals, one ends of the extension portions (542) are connected to the guiding portion (541) and the other ends of the extension portions (542) are adapted to extend towards an edge of the front side wall of the cooking cavity (11, 511, 611), and a flow guiding region (543) is adapted to be formed between two adjacent extension portions (542), and the flow guiding regions (543) correspond to at least part of the air inlet holes (211, 5211, 6311); and hot air gaps (514) are formed between left and right side walls of the food basket (21, 521, 631) and the inner wall of the cooking cavity (11, 511, 611), and a heat flow in the hot air gaps (514) enters the flow guiding regions (543) and is adapted to be blocked and collected by the extension portions (542) and the guiding portion (541) and is introduced into the food basket (21, 521, 631) through the air inlet holes (211, 5211, 6311); and
further, each extension portion (542) has an arc-shaped structure, extension directions of the extension portions (542) are adapted to be directed towards left and right side walls of the cooking cavity (11, 511, 611), respectively, facing the same direction, and the flow guiding region (543) with a hemispherical shape is adapted to be formed between two adjacent extension portions (542), and a heat flow in the flow guiding regions (543) is adapted to flow in a direction opposite to the extension directions of the extension portions (542).

8. The air fryer with high heating efficiency according to claim 7, **characterized in that** both the guiding portion (541) and the extension portions (542) have a trapezoidal cross section with a small upper part and a large lower part.

9. The air fryer with high heating efficiency according to claim 7, **characterized in that** the guiding portion (541) is located in a middle of the front side wall of the cooking cavity (11, 511, 611), and a projection of the guiding portion (541) on a front side wall of the food basket (21, 521, 631) is located in a middle of the front side wall of the food basket (21, 521, 631), the extension portions (542) are formed by the guiding portion (541) extending outwardly, and the guiding portion (541) and the extension portions (542) and the front side wall of the cooking cavity (11, 511, 611) are integrally formed.

10. The air fryer with high heating efficiency according to claim 1, **characterized in that** a frying plate (522) is suspended inside the food basket (21, 521, 631), and the frying plate (522) is provided with a plurality of small holes communicating an upper space with a lower space of the frying plate (522); and the air inlet holes (211, 5211, 6311) are formed in a front side wall of the food basket (21, 521, 631) above and below the frying plate (522); and
further, a bottom of the frying plate (522) is provided with a plurality of elongated guide grooves (5221) in parallel, the guide grooves (5221) are formed by the bottom of the frying plate (522) being recessed upward, the guide grooves (5221) each have a front opening and a rear opening, the front openings correspond to at least part of the air inlet holes (211, 5211, 6311), and the rear openings correspond to at least part of the air outlet holes (212, 5212, 6312).

11. The air fryer with high heating efficiency according to claim 10, **characterized in that** a first flow guiding structure (540) corresponding to the air inlet holes (211, 5211, 6311) is disposed on a front side wall of the cooking cavity (11, 511, 611), a heat flow generated by the air frying system (13, 530, 620) is guided to the air inlet holes (211, 5211, 6311) by the first flow guiding structure (540), a projection of the frying plate (522) on the front side wall of the cooking cavity (11, 511, 611) is located in a middle of the first flow guiding structure (540), and a projection of the frying plate (522) on a rear side wall of the cooking cavity (11, 511, 611) is located in a middle of the air return holes (141, 5131, 6131).

12. The air fryer with high heating efficiency according to any one of claims 1 to 11, **characterized in that** the air frying system (13, 530, 620) comprises a heat circulation fan (532) and a heat generating tube (533) disposed in front of the heat circulation fan (532), an air guide cover (515) is disposed between the heat circulation fan (532) and the heat generating tube (533), and a flow guide channel (516) is formed between the air guide cover (515) and an inner wall of the hot air cavity (12, 51, 612), the flow guide channel (516) is provided with a hot air outlet (5161), and the hot air outlet (5161) is located at an edge of the air guide cover (515); a hot air inlet (5151) communicating with the flow guide channel (516) and corresponding to the heat circulation fan (532) is disposed in a middle of the air guide cover (515); and the ventilation holes (14, 513, 613) comprise the air return holes (141, 5131, 6131) corresponding to the hot air inlet (5151) and the hot air holes (142, 5132, 6132) corresponding to the hot air outlet (5161), and a heat flow within the food basket (21, 521, 631) is adapted to flow out from the air outlet holes (212, 5212, 6312), passes through the air return holes (141, 5131, 6131), enters the flow guide channel (516) from the hot air inlet (5151), is guided to the hot air outlet (5161) by the flow guide channel (516), and flows into the cooking cavity (11, 511, 611) from the hot air outlet (5161) through the hot air holes (142, 5132, 6132).

13. The air fryer with high heating efficiency according to any one of claims 1 to 11, **characterized in that** the top of the cooking cavity (11, 511, 611) has a top opening (615), a handle (6313) is disposed on both sides of the frying basket assembly (20, 520, 630), an outer edge of the top opening (615) is provided with receiving grooves (616) matched with the handle (6313), when the frying basket assembly (20, 520, 630) is disposed within the cooking cavity (11, 511, 611), the handle (6313) is adapted to be disposed within the receiving grooves (616), and a top end of the handle (6313) is flush with top ends of the receiving grooves (616), and when the handle (6313) is disposed within the receiving grooves (616), a bottom of the handle (6313) is adapted to abut against bottoms of the receiving grooves (616), and the frying basket assembly (20, 520, 630) is adapted to be suspended within the cooking cavity (11, 511, 611) by the handle (6313).

14. The air fryer with high heating efficiency according to any one of claims 1 to 11, **characterized in that** the food basket (21, 521, 631) is provided with a receiving cavity (6314), a bottom of the receiving cavity (6314) is provided with a second flow guiding structure (632) protruding upward, and the second flow guiding structure (632) is adapted to correspond to at least part of the air inlet holes (211, 5211, 6311); and a hot air gap (614) is formed between the left and right side walls of the food basket (21, 521, 631) and the inner wall of the cooking cavity (11, 511, 611), and a circulating heat flow in the hot air gap (614) enters the receiving cavity (6314) through the air inlet holes (211, 5211, 6311), is at least partially guided by the second flow guiding structure (632) and flows towards a top of the receiving cavity (6314); and
further, the second flow guiding structure (632) comprises a plurality of wave-shaped flow guiding ribs (6321) formed by a bottom wall of the food basket (21, 521, 631) being recessed upwards.

15. The air fryer with high heating efficiency according to claim 14, **characterized in that** the second flow guiding structure (632) comprises a plurality of spaced flow guiding ribs (6321) protruding from a bottom wall of the receiving cavity (6314) and extending from an edge of the bottom wall of the receiving cavity (6314) to a middle of the bottom wall of the receiving cavity (6314).

## Patentansprüche

1. Eine Heißluftfritteuse mit hoher Heizeffizienz, bestehend aus einem Frittierkörper (10, 610), einem im Frittierkörper (10, 610) angeordneten Garraum (11, 511, 611), einem außerhalb des hinteren Bereichs des Garraums (11, 511, 611) angeordneten Heißluftraum (12, 51, 612) und einem Heißluftfrittiersystem (13, 530, 620), das innerhalb des Heißluftraums (12, 51, 612) angeordnet und so konfiguriert ist, dass ein zirkulierender Wärmestrom erzeugt wird, **dadurch gekennzeichnet, dass** eine Seitenwand des Garraums (11, 511, 611), die an eine Seite des Heißluftfrittiersystems (13, 530, 620) angrenzt, mit Belüftungsöffnungen (14, 513, 613) versehen ist, die dem Heißluftfrittiersystem (13, 530, 620) entsprechen, und die Belüftungsöffnungen (14, 513, 613) Luftrückführungsöffnungen (141, 5131, 6131) in der Mitte und Heißluftlöcher (142, 5132, 6132) an den äußeren Rändern der Luftrückführungsöffnungen (141, 5131, 6131) umfassen; eine Frittierkorbanordnung (20, 520, 630) herausnehmbar im Garraum (11, 511, 611) angeordnet ist; die Frittierkorbanordnung (20, 520, 630) aus einem Lebensmittelkorb (21, 521, 631) und einer Strömungsführung (22), die zwischen dem Lebensmittelkorb (21, 521, 631) und einer Innenwand des Garraums (11, 511, 611) angeordnet ist, besteht; mindestens die Vorder- und Rückwand des Lebensmittelkorbs (21, 521, 631) jeweils mit Lufteinlassöffnungen (211, 5211, 6311) und Luftauslassöffnungen (212, 5212, 6312) versehen sind; die Luftauslassöffnungen (212, 5212, 6312) des Lebensmittelkorbs (21, 521, 631) den Luftrückführungsöffnungen (141, 5131, 6131) entsprechen; und die Strömungsführung (22) so angepasst ist, dass sie sich von der linken und rechten Seite des Lebensmittelkorbs (21, 521, 631) bis zu einer Rückseite des Lebensmittelkorbs (21, 521, 631) erstreckt; und zwischen der Strömungsführung (22) und einer Seitenwand des Garraums (11, 511, 611) ein Wärmezirkulationskanal (15) gebildet wird, der mit den Heißluftöffnungen (142, 5132, 6132) in Verbindung steht, und ein vom Heißluftfrittiersystem (13, 530, 620) erzeugter zirkulierender Wärmestrom durch die Heißluftöffnungen (142, 5132, 6132) in den Garraum (11, 511, 611) strömt, von der Strömungsführung (22) in den Wärmezirkulationskanal (15) geleitet wird und zu einer Vorderseite des Garraums (11, 511, 611) strömt, dann durch die Lufteinlassöffnungen (211, 5211, 6311) an der Vorderseite des Lebensmittelkorbs (21,521, 631) in den Lebensmittelkorb (21, 521, 631) gelangt und durch die Luftauslassöffnungen (212, 5212, 6312) ausströmt und schließlich über die Luftrückführungsöffnungen (141, 5131, 6131) in den Heißluftraum (12, 51, 612) zurückströmt.

2. Die Heißluftfritteuse mit hoher Heizeffizienz nach Anspruch 1, **dadurch gekennzeichnet, dass** die Strömungsführung (22) eine kreisbogenförmige Strömungsführungsstruktur ist, die längs auf beiden Seiten des Lebensmittelkorbs (21, 521, 631) parallel zu einer Seitenwand des Lebensmittelkorbs (21, 521, 631) angeordnet ist und sich von beiden Seiten des Lebensmittelkorbs (21,521, 631) bis zur Rückseite des Lebensmittelkorbs (21, 521, 631) erstreckt;
die Frittierkorbanordnung (20, 520, 630) ferner eine unter dem Lebensmittelkorb (21, 521, 631) angeordnete Ölauffangwanne (23) umfasst, deren Boden mit Ölaustrittslöchern (213) versehen ist, und die Ölauffangwanne (23) so ausgelegt ist, dass sie die Ölaustrittslöcher (213) vollständig abdeckt; und
die Strömungsführung (22) ferner an einer Außenkante der Ölauffangwanne (23) angeordnet ist und durch die nach oben verlaufende Ölauffangwanne (23) gebildet wird.

3. Die Heißluftfritteuse mit hoher Heizeffizienz nach Anspruch 2, **dadurch gekennzeichnet, dass** die Ölauffangwanne (23) einen nach oben und vorne offenen Aufnahmeraum (24) mit der Strömungsführung (22) umschließt, eine Schnalle (214) am Lebensmittelkorb (21,521, 631) angeordnet ist, eine Innenwand des Aufnahmeraums (24) mit einer Begrenzungsstruktur (241) versehen ist, die an der Schnalle (214) befestigt werden kann, der Lebensmittelkorb (21,521, 631) mittels der Begrenzungsstruktur (241) und der Schnalle (214) abnehmbar im Aufnahmeraum (24) aufgehängt werden kann, eine dem Lebensmittelkorb (21,521, 631) zugewandte Seite der Strömungsführung (22) mit konvexen Rippen (221) versehen ist und die konvexen Rippen (221) an einer Seitenwand des Lebensmittelkorbs (21,521, 631) anliegen. 631).

4. Die Heißluftfritteuse mit hoher Heizeffizienz nach Anspruch 2, **dadurch gekennzeichnet, dass** ein Boden der Strömungsführung (22) so ausgelegt ist, dass er mit der Ölauffangwanne (23) verbunden werden kann; sich ein oberer Teil der Strömungsführung (22) bis zum oberen Bereich des Garraums (11, 511, 611) erstreckt und der obere Teil der Strömungsführung (22) mit einem Griff (25) versehen ist, der aus dem Garraum (11, 511, 611) herausragt; der Garraum (11, 511, 611) eine obere Öffnung (16) aufweist, deren Außenkante mit passenden Schlitzen (17) versehen ist, die mit dem Griff (25) übereinstimmen; wenn sich die Frittierkorbanordnung (20, 520, 630) im Garraum (11, 511, 611) befindet, der Griff (25) in den passenden Schlitzen (17) liegt und eine Oberseite des Griffs (25) bündig mit den Oberseiten der entsprechenden Schlitze (17) ist, und wenn die Frittierkorbanordnung (20, 520, 630) im Garraum (11, 511, 611) befindet, eine Unterseite des Griffs (25) so gestaltet ist, dass sie an den Böden der entsprechenden Schlitze (17) anliegt, und die Frittierkorbanordnung (20, 520, 630) so gestaltet ist, dass sie mit dem Griff (25) im Garraum (11, 511, 611) aufgehängt werden kann.

5. Die Heißluftfritteuse mit hoher Heizeffizienz nach Anspruch 1, **dadurch gekennzeichnet, dass** die Oberseite des Garraums (11, 511, 611) mit einer oberen Öffnung (16) versehen ist, ein Deckel (18), der zum Öffnen und Schließen der oberen Öffnung (16) umgeklappt werden kann, über der oberen Öffnung (16) angeordnet ist und der Deckel (18) mit einer Fensteranordnung (19) versehen ist, die der Frittierkorbanordnung (20, 520, 630) entspricht.

6. Die Heißluftfritteuse mit hoher Heizeffizienz nach Anspruch 1, **dadurch gekennzeichnet, dass** eine erste Strömungsführungsstruktur (540), die den Lufteinlassöffnungen (211, 5211, 6311) entspricht, an einer vorderen Seitenwand des Garraums (11, 511, 611) angeordnet ist; und ein durch das Heißluftfrittiersystem (13, 530, 620) erzeugter Wärmestrom durch die erste Strömungsführungsstruktur (540) zu den Lufteinlassöffnungen (211, 5211, 6311) geleitet wird.

7. Die Heißluftfritteuse mit hoher Heizeffizienz nach Anspruch 6, **dadurch gekennzeichnet, dass** die erste Strömungsführungsstruktur (540) einen Führungsabschnitt (541), der von der vorderen Seitenwand des Garraums (11, 511, 611) herausragt, und mehrere in Abständen angeordnete Verlängerungsabschnitte (542) umfasst, wobei ein Ende der Verlängerungsabschnitte (542) mit dem Führungsabschnitt (541) verbunden ist und das andere Ende der Verlängerungsabschnitte (542) sich zu einer Kante der vorderen Seitenwand des Garraums (11, 511, 611) erstreckt, und zwischen zwei benachbarten Verlängerungsabschnitten (542) ein Strömungsführungsbereich (543) ausgebildet ist, wobei die Strömungsführungsbereiche (543) mindestens einem Teil der Lufteinlassöffnungen (211, 5211, 6311) entsprechen; zwischen der linken und rechten Seitenwand des Lebensmittelkorbs (21,521, 631) und der Innenwand des Garraums (11, 511, 611) sich Heißluftspalte (514) bilden, und ein Wärmestrom in den Heißluftspalten (514) in die Strömungsführungsbereiche (543) gelangt, von den Verlängerungsabschnitten (542) und dem Führungsabschnitt (541) blockiert und gesammelt wird und durch die Lufteinlassöffnungen (211, 5211, 6311) in den Lebensmittelkorb (21, 521, 631) eingeführt wird; und
jeder Verlängerungsabschnitt (542) ferner eine bogenförmige Struktur aufweist, wobei die Verlängerungsabschnitte (542) jeweils zur linken und rechten Seitenwand des Garraums (11, 511, 611) ausgerichtet sind und in dieselbe Richtung zeigen; zwischen zwei benachbarten Verlängerungsabschnitten (542) sich ein halbkugelförmiger Strömungsführungsbereich (543) bildet, und ein Wärmestrom in diesem Strömungsführungsbereich (543) entgegengesetzt zu den Verlängerungsrichtungen der Verlängerungsabschnitte (542) fließt.

8. Die Heißluftfritteuse mit hoher Heizeffizienz nach Anspruch 7, **dadurch gekennzeichnet, dass** sowohl der Führungsabschnitt (541) als auch die Verlängerungsabschnitte (542) einen trapezförmigen Querschnitt mit einem kleinen oberen Teil und einem großen unteren Teil aufweisen.

9. Die Heißluftfritteuse mit hoher Heizeffizienz nach Anspruch 7, **dadurch gekennzeichnet, dass** sich der Führungsabschnitt (541) mittig an der vorderen Seitenwand des Garraums (11, 511, 611) befindet und ein Vorsprung des Führungsabschnitts (541) an der vorderen Seitenwand des Lebensmittelkorbs (21,521, 631) mittig an der vorderen Seitenwand des Lebensmittelkorbs (21,521, 631) angeordnet ist, die Verlängerungsabschnitte (542) durch das nach außen verlaufende Führungsabschnitt (541) gebildet werden und der Führungsabschnitt (541), die Verlängerungsabschnitte (542) und die vordere Seitenwand des Garraums (11, 511, 611) einstückig geformt sind.

10. Die Heißluftfritteuse mit hoher Heizeffizienz nach Anspruch 1, **dadurch gekennzeichnet, dass** eine Frittierplatte (522) im Inneren des Lebensmittelkorbs (21,521, 631) aufgehängt ist und die Frittierplatte (522) mit einer Vielzahl kleiner Löcher versehen ist, die einen oberen Raum mit einem unteren Raum der Frittierplatte (522) verbinden; und die Lufteinlasslöcher (211, 5211, 6311) in einer vorderen Seitenwand des Lebensmittelkorbs (21,521, 631) oberhalb und unterhalb der Frittierplatte (522) ausgebildet sind; und
der Boden der Frittierplatte (522) ferner mit einer Vielzahl von länglichen Führungsnuten (5221) versehen ist, die parallel angeordnet sind, die Führungsnuten (5221) durch eine nach oben vertiefte Unterseite der Frittierplatte (522) gebildet werden, jede Führungsnut (5221) eine vordere und eine hintere Öffnung aufweist, die vorderen Öffnungen mindestens einem Teil der Lufteinlasslöcher (211, 5211, 6311) entsprechen und die hinteren Öffnungen mindestens einem Teil der Luftauslassöffnungen (212, 5212, 6312) entsprechen.

11. Die Heißluftfritteuse mit hoher Heizeffizienz nach Anspruch 10, **dadurch gekennzeichnet, dass** sich eine erste Strömungsführungsstruktur (540), die den Lufteinlassöffnungen (211, 5211, 6311) entspricht, ein durch das Heißluftfrittiersystem (13, 530, 620) erzeugter Wärmestrom durch die erste Strömungsführungsstruktur (540) zu den Lufteinlassöffnungen (211, 5211, 6311) geleitet wird, ein Vorsprung der Frittierplatte (522) an der vorderen Seitenwand des Garraums (11, 511, 611) sich in der Mitter der ersten Strömungsführungsstruktur (540) befindet, und ein weiterer Vorsprung der Frittierplatte (522) an der hinteren Seitenwand des Garraums (11, 511, 611) sich in der Mitter der Luftrückführungsöffnungen (141, 5131, 6131) befindet.

12. Die Heißluftfritteuse mit hoher Heizeffizienz nach einem der Ansprüche 1 bis 11, **dadurch gekennzeichnet, dass** das Heißluftfrittiersystem (13, 530, 620) einen Wärmeumwälzventilator (532) und ein vor dem Wärmeumwälzventilator (532) angeordnetes Wärmeerzeugungsrohr (533) umfasst, eine Luftführungsabdeckung (515) zwischen dem Wärmeumwälzventilator (532) und dem Wärmeerzeugungsrohr (533) angeordnet ist und ein Strömungskanal (516) zwischen der Luftführungsabdeckung (515) und einer Innenwand des Heißluftraums (12, 51, 612) ausgebildet ist, der Strömungskanal (516) mit einem Heißluftauslass (5161) versehen ist und sich der Heißluftauslass (5161) an einer Kante der Luftführungsabdeckung (515) befindet; sich in der Mitte der Luftführungsabdeckung (515) ein Heißlufteinlass (5151) befindet, der mit dem Strömungsführungskanal (516) in Verbindung steht und dem Wärmeumwälzventilator (532) zugeordnet ist; die Belüftungsöffnungen (14, 513, 613) die Luftrückführungsöffnungen (141, 5131, 6131) für den Heißlufteinlass (5151) und die Heißluftöffnungen (142, 5132, 6132) für den Heißluftauslass (5161) umfassen; und ein Wärmestrom im Lebensmittelkorb (21,521, 631) durch die Luftauslassöffnungen (212, 5212, 6312) strömt, die Luftrückführungsöffnungen (141, 5131, 6131) durchströmt, vom Heißlufteinlass (5151) in den Strömungskanal (516) gelangt, durch diesen zum Heißluftauslass (5161) geleitet wird und vom Heißluftauslass (5161) durch die Heißluftlöcher (142, 5132, 6132) in den Garraum (11, 511, 611) strömt.

13. Die Heißluftfritteuse mit hoher Heizeffizienz nach einem der Ansprüche 1 bis 11, **dadurch gekennzeichnet, dass** die Oberseite des Garraums (11, 511, 611) eine Öffnung (615) aufweist, beidseitig der Frittierkorbanordnung (20, 520, 630) ein Griff (6313) angeordnet ist, der Außenrand der Öffnung (615) mit Aufnahmenuten (616) versehen ist, die zum Griff (6313) passen, wenn die Frittierkorbanordnung (20, 520, 630) im Garraum (11, 511, 611) angeordnet ist, der Griff (6313) in die Aufnahmenuten (616) passt und sein oberes Ende bündig mit den oberen Enden der Aufnahmenuten (616) abschließt, und sein unteres Ende angepasst ist, wenn der Griff (6313) in den Aufnahmenuten (616) angeordnet ist. um an den Boden der Aufnahmenuten (616) anzustoßen, und die Frittierkorbanordnung (20, 520, 630) so ausgelegt ist, dass sie mit dem Griff (6313) im Garraum (11, 511, 611) aufgehängt werden kann.

14. Die Heißluftfritteuse mit hoher Heizeffizienz nach einem der Ansprüche 1 bis 11, **dadurch gekennzeichnet, dass** der Lebensmittelkorb (21, 521, 631) mit einem Aufnahmeraum (6314) versehen ist, dessen Boden mit einer zweiten, nach oben herausragenden Strömungsführungsstruktur (632) versehen ist und die zweite Strömungsführungsstruktur (632) so angepasst ist, dass sie mindestens einem Teil der Lufteinlasslöcher (211, 5211, 6311) entspricht; zwischen der linken und rechten Seitenwand des Lebensmittelkorbs (21,521, 631) und der Innenwand des Garraums (11, 511, 611) ein Heißluftspalt (614) gebildet wird, und ein zirkulierender Wärmestrom im Heißluftspalt (614) durch die Lufteinlassöffnungen (211, 5211, 6311) in den Aufnahmeraum (6314) eintritt, zumindest teilweise durch die zweite Strömungsführungsstruktur (632) geführt wird und zur Oberseite des Aufnahmeraums (6314) strömt; die zweite Strömungsführungsstruktur (632) ferner eine Vielzahl wellenförmiger Strömungsleitrippen (6321) umfasst, die durch eine nach oben vertiefte Bodenwand des Lebensmittelkorbs (21,521, 631) gebildet werden.

15. Die Heißluftfritteuse mit hoher Heizeffizienz nach Anspruch 14, **dadurch gekennzeichnet, dass** die zweite Strömungsführungsstruktur (632) eine Vielzahl von beabstandeten Strömungsführungsrippen (6321) umfasst, die von einer Bodenwand des Aufnahmeraums (6314) herausragen und sich von einer Kante der Bodenwand des Aufnahmeraums (6314) bis zur Mitte der Bodenwand des Aufnahmeraums (6314) erstrecken.

## Revendications

1. Une friteuse à air à haute efficacité chauffante, comprenant un corps de friteuse (10, 610), une cavité de cuisson (11, 511, 611) disposée à l'intérieur du corps de friteuse (10, 610), une cavité d'air chaud (12, 51, 612) disposée à l'extérieur d'une partie arrière de la cavité de cuisson (11, 511, 611), et un système de friture à air (13, 530, 620) disposé dans la cavité d'air chaud (12, 51, 612) et configurées pour générer un flux de chaleur circulant, **caractérisé en ce qu'**une paroi latérale, adjacente à un côté du système de friture à air (13, 530, 620), de la cavité de cuisson (11, 511, 611) est dotée de trous de ventilation (14, 513, 613) correspondant au système de friture à air (13, 530, 620) et aux trous de ventilation (14, 513, 613) comprennent des trous de retour d'air (141, 5131, 6131) au milieu et des trous d'air chaud (142, 5132, 6132) dans les bords extérieurs des trous de retour d'air (141, 5131, 6131) ; un ensemble panier à frire (20, 520, 630) est disposé de manière amovible dans la cavité de cuisson (11, 511, 611), l'ensemble panier à frire (20, 520, 630) comprend un panier d'aliments (21, 521, 631) et un guide de flux (22) disposé entre le panier d'aliments (21, 521, 631) et une paroi intérieure de la cavité de cuisson (11, 511, 611), au moins les parois avant et arrière latérales du panier d'aliments (21, 521, 631) sont respectivement dotées de trous d'entrée d'air (211, 5211, 6311) et de trous de sortie d'air (212, 5212, 6312), les trous de sortie d'air (212, 5212, 6312) du panier d'aliments (21, 521, 631) correspondent aux trous de retour d'air (141, 5131, 6131), et le guide d'écoulement (22) est adapté pour s'étendre depuis les côtés gauche et droit du panier d'aliments (21, 521, 631) à l'arrière du panier d'aliments (21, 521, 631), et un canal d'air de circulation de chaleur (15) communiquant avec les trous d'air chaud (142, 5132, 6132) est formé entre le guide d'écoulement (22) et une paroi latérale de la cavité de cuisson (11, 511, 611), et un flux de chaleur circulant généré par le système de friture à air (13, 530, 620) entre dans la cavité de cuisson (11, 511, 611) par les trous d'air chaud (142, 5132, 6132) et est adapté pour être guidé par le guide d'écoulement (22) dans le canal d'air de circulation de chaleur (15) et s'écoule vers une partie avant de la cavité de cuisson (11, 511, 611), entre dans le panier d'aliments (21, 521, 631) par les trous d'entrée d'air (211, 5211, 6311) situés à l'avant du panier d'aliments (21, 521, 631) et s'écoule par les trous de sortie d'air (212, 5212, 6312) et revient vers la cavité d'air chaud (12, 51, 612) par les trous de retour d'air (141, 5131, 6131).

2. Friteuse à air à haute efficacité chauffante selon la revendication 1, **caractérisée en ce que** le guide d'écoulement (22) est une structure circulaire en forme d'arc disposée longitudinalement de chaque côté du panier d'aliments (21, 521, 631), parallèle à une paroi latérale du panier d'aliments (21, 521, 631), et s'étendant de chaque côté du panier d'aliments (21, 521, 631) à l'arrière du panier d'aliments (21, 521, 631) ;
en outre, l'ensemble panier à frire (20, 520, 630) comprend également un bac récupérateur d'huile (23) disposé sous le panier d'aliments (21, 521, 631), un fond du panier d'aliments (21, 521, 631) est doté de trous d'évacuation d'huile (213), et le bac récupérateur d'huile (23) est adapté pour couvrir complètement les trous d'évacuation d'huile (213) ; et
en outre, le guide d'écoulement (22) est disposé sur un bord extérieur du bac récupérateur d'huile (23) et est formé par le bac récupérateur d'huile (23) qui s'étend vers le haut.

3. Friteuse à air à haute efficacité chauffante selon la revendication 2, **caractérisée en ce que** le bac récupérateur d'huile (23) est adapté pour englober une cavité de réception (24) ouverte sur le dessus et à l'avant avec le guide de flux (22), une boucle (214) est disposée sur le panier d'aliments (21, 521, 631), une paroi intérieure de la cavité de réception (24) est dotée d'une structure de limitation (241) pouvant être fixée à la boucle (214), le panier d'aliments (21, 521, 631) est adapté pour être suspendu de manière détachable dans la cavité de réception (24) par la structure de limitation (241) et la boucle (214), un côté, face au panier d'aliments (21, 521, 631), du guide d'écoulement (22) est doté de nervures convexes (221), et les nervures convexes (221) sont adaptées pour s'appuyer contre une paroi latérale du panier d'aliments (21, 521, 631).

4. Friteuse à air à haute efficacité chauffante selon la revendication 2, **caractérisée en ce qu'**un bas du guide de flux (22) est adapté pour être connecté au bac récupérateur d'huile (23), un haut du guide de flux (22) est adapté pour s'étendre jusqu'à une partie supérieure de la cavité de cuisson (11, 511, 611), et le haut du guide de flux (22) est doté d'une poignée (25) s'étendant vers l'extérieur de la cavité de cuisson (11, 511, 611), un sommet de la cavité de cuisson (11, 511, 611) possède une ouverture supérieure (16), un bord extérieur de l'ouverture supérieure (16) est doté de fentes correspondantes (17) à la poignée (25), lorsque l'ensemble du panier à frire (20, 520, 630) est disposé dans la cavité de cuisson (11, 511, 611), la poignée (25) est disposée dans les fentes correspondantes (17), et le dessus de la poignée (25) est affleurant avec le dessus des fentes correspondantes (17), et lorsque l'ensemble du panier à frire (20, 520, 630) est disposé dans la cavité de cuisson (11, 511, 611), le bas de la poignée (25) est adapté pour s'appuyer contre le bas des fentes correspondantes (17), et l'ensemble du panier à frire (20, 520, 630) est adapté pour être suspendu dans la cavité de cuisson (11, 511, 611) par la poignée (25).

5. Friteuse à air à haute efficacité chauffante selon la revendication 1, **caractérisée en ce qu'**un sommet de la cavité de cuisson (11, 511, 611) est doté d'une ouverture supérieure (16), un couvercle supérieur (18) qui peut être retourné pour ouvrir et fermer l'ouverture supérieure (16) est disposé à l'ouverture supérieure (16), et le couvercle supérieur (18) est doté d'un ensemble fenêtre (19) correspondant à l'ensemble panier à frire (20, 520, 630).

6. Friteuse à air à haute efficacité chauffante selon la revendication 1, **caractérisée en ce qu'**une première structure de guidage de flux (540) correspondant aux trous d'entrée d'air (211, 5211, 6311) est disposée sur une paroi frontale de la cavité de cuisson (11, 511, 611) ; et un flux de chaleur généré par le système de friture à air (13, 530, 620) est guidé vers les trous d'entrée d'air (211, 5211, 6311) par la première structure de guidage d'écoulement (540).

7. Friteuse à air à haute efficacité chauffante selon la revendication 6, **caractérisée en ce que** la première structure de guidage de flux (540) comprend une partie de guidage (541) qui dépasse de la paroi frontale de la cavité de cuisson (11, 511, 611) et une pluralité de parties d'extension (542) disposées à intervalles ; une extrémité des parties d'extension (542) est reliée à la partie de guidage (541) et les autres extrémités des parties d'extension (542) sont adaptées pour s'étendre vers un bord de la paroi latérale avant de la cavité de cuisson (11, 511, 611), et une région de guidage d'écoulement (543) est adaptée pour se former entre deux parties d'extension adjacentes (542), et les régions de guidage d'écoulement (543) correspondent au moins à une partie des trous d'entrée d'air (211, 5211, 6311) ; et des espaces d'air chaud (514) se forment entre les parois gauche et droite du panier d'aliments (21, 521, 631) et la paroi intérieure de la cavité de cuisson (11, 511, 611), et un flux de chaleur dans les espaces d'air chaud (514) entre dans les régions de guidage du flux (543) et est adapté pour être bloqué et collecté par les parties d'extension (542) et la partie de guidage (541), puis introduit dans le panier d'aliments (21, 521, 631) par les trous d'entrée d'air (211, 5211, 6311) ; et
en outre, chaque partie d'extension (542) a une structure courbe, les directions d'extension des parties d'extension (542) sont adaptées pour être dirigées respectivement vers les parois latérales gauche et droite de la cavité de cuisson (11, 511, 611), orientées dans la même direction, et la région de guidage d'écoulement (543) de forme hémisphérique est adaptée pour être formée entre deux parties d'extension adjacentes (542), et un flux de chaleur dans les régions guidant l'écoulement (543) est adapté pour s'écouler dans une direction opposée à celle des directions d'extension des parties d'extension (542).

8. Friteuse à air à haute efficacité chauffante selon la revendication 7, **caractérisée en ce que** la partie de guidage (541) et les parties d'extension (542) ont toutes deux une section transversale trapézoïdale avec une petite partie supérieure et une grande partie inférieure.

9. Friteuse à air à haute efficacité chauffante selon la revendication 7, **caractérisée en ce que** la partie de guidage (541) se trouve au milieu de la paroi latérale avant de la cavité de cuisson (11, 511, 611), et une projection de la partie de guidage (541) sur une paroi latérale avant du panier d'aliments (21, 521, 631) est située au centre de la paroi latérale avant du panier d'aliments (21, 521, 631), les parties d'extension (542) sont formées par la partie de guidage (541) qui s'étend vers l'extérieur, et la partie de guidage (541), les parties d'extension (542) ainsi que la paroi latérale avant de la cavité de cuisson (11, 511, 611) sont formées intégralement.

10. Friteuse à air à haute efficacité chauffante selon la revendication 1, **caractérisée en ce qu'**une plaque de friture (522) est suspendue à l'intérieur du panier d'aliments (21, 521, 631), et que la plaque de friture (522) est dotée d'une pluralité de petits trous communiquant entre un espace supérieur et un espace inférieur de la plaque (522) ; et les trous d'entrée d'air (211, 5211, 6311) sont formés dans une paroi latérale avant du panier d'aliments (21, 521, 631) au-dessus et en dessous de la plaque de friture (522) ; et
en outre, le fond de la plaque de friture (522) est doté d'une pluralité de rainures de guidage allongées (5221) parallèlement, les rainures de guidage (5221) sont formées par le fond de la plaque de friture (522) encastré vers le haut, les rainures de guidage (5221) ont chacune une ouverture avant et une ouverture arrière, les ouvertures avant correspondent au moins à une partie des trous d'entrée d'air (211, 521 1,6311), et les ouvertures arrière correspondent au moins en partie aux trous de sortie d'air (212, 5212, 6312).

11. Friteuse à air à haute efficacité chauffante selon la revendication 10, **caractérisée en ce que** la première structure de guidage de flux (540) correspondant aux trous d'entrée d'air (211, 5211, 6311) est placée sur un paroi latérale avant de la cavité de cuisson (11, 511, 611), un flux de chaleur généré par la friture à air système de friture à air (13, 530, 620) est guidé vers les trous d'entrée d'air (211, 5211, 6311) par la première structure de guidage de flux (540), une projection de la plaque de friture (522) sur la paroi frontale de la cavité de cuisson (11, 511, 611) est située au centre de la première structure de guidage d'écoulement (540), et une projection de la plaque de friture (522) sur une paroi latérale arrière de la cavité de cuisson (11, 511, 611) est située au milieu des trous de retour d'air (141, 5131, 6131).

12. Friteuse à air à haute efficacité chauffante selon l'une des revendications 1 à 11, **caractérisée en ce que** le système de friture à air (13, 530, 620) comprend un ventilateur de circulation de chaleur (532) et un tube de production de chaleur (533) disposé devant le ventilateur de circulation de chaleur (532), un couvercle de guidage d'air (515) étant placé entre le ventilateur de circulation de chaleur (532) et le tube de production de chaleur (533), et un canal de guidage d'écoulement (516) est formé entre le couvercle de guidage d'air (515) et une paroi intérieure de la cavité d'air chaud (12, 51, 612), le canal de guidage d'écoulement (516) est équipé d'une sortie d'air chaud (5161), et la sortie d'air chaud (5161) est située sur un bord du couvercle de guidage d'air (515) ; une entrée d'air chaud (5151) communiquant avec le canal de guidage d'écoulement (516) et correspondant au ventilateur de circulation thermique (532) est disposée au centre du couvercle du guide d'air (515) ; et les trous de ventilation (14, 513, 613) constituent les trous de retour d'air (141, 5131, 6131) correspondant à l'entrée d'air chaud (5151) et aux trous d'air chaud (142, 5132, 6132) correspondant à la sortie d'air chaud (5161), et un flux de chaleur à l'intérieur du panier d'aliments (21, 521, 631) est adapté pour s'écouler par les trous de sortie d'air (212, 5212, 6312), passe par les trous de retour d'air (141, 5131, 6131), entre dans le canal de guidage d'écoulement (516) depuis l'entrée d'air chaud (5151), est guidé vers la sortie d'air chaud (5161) par le canal de guidage d'écoulement (516), et s'écoule dans la cavité de cuisson (11, 511, 611) depuis la sortie d'air chaud (516i) par les trous d'air chaud (142, 5132, 6132).

13. Friteuse à air à haute efficacité chauffante selon l'une des revendications 1 à 11, **caractérisée en ce que** le haut de la cavité de cuisson (11, 511, 611) possède une ouverture supérieure (615), une poignée (6313) est disposée de chaque côté de l'ensemble panier à frire (20, 520, 630), un bord extérieur de l'ouverture supérieure (615) est doté de rainures de réception (616) correspondantes à la poignée (6313), lorsque l'ensemble panier à frire (20, 520, 630) est disposé dans la cavité de cuisson (11, 511, 611), la poignée (6313) est adaptée pour être placée dans les rainures de réception (616), et une extrémité supérieure de la poignée (6313) affleure avec les extrémités supérieures des rainures de réception (616), et lorsque la poignée (6313) est disposée dans les rainures de réception (616), le bas de la poignée (6313) est adapté pour s'appuyer contre le fond des rainures de réception (616), et l'ensemble panier à frire (20, 520, 630) est adapté pour être suspendu dans la cavité de cuisson (11, 511, 611) par la poignée (6313).

14. Friteuse à air à haute efficacité chauffante selon l'une des revendications 1 à 11, **caractérisée en ce que** le panier d'aliments (21, 521, 631) est équipé d'une cavité de réception (6314), d'un fond de la cavité de réception (6314) d'une seconde structure de guidage de flux (632) qui dépasse vers le haut, et la seconde structure de guidage de flux (632) est adaptée pour correspondre au moins à une partie des trous d'entrée d'air (211, 5211, 6311) ; et un espace d'air chaud (614) se forme entre les parois gauche et droite du panier d'aliments (21, 521, 631) et la paroi intérieure de la cavité de cuisson (11, 511, 611), et un flux de chaleur circulant dans l'espace d'air chaud (614) entre dans la cavité de réception (6314) par les trous d'entrée d'air (211, 5211, 6311), est au moins partiellement guidé par la seconde structure de guidage d'écoulement (632) et s'écoule vers un sommet de la cavité de réception (6314) ; et la seconde structure de guidage de flux (632) comprend en outre une pluralité de nervures de guidage de flux en forme de vague (6321) formées par une paroi inférieure du panier d'aliments (21, 521, 631) encastrée vers le haut.

15. Friteuse à air à haute efficacité chauffante selon la revendication 14, **caractérisée en ce que** la seconde structure de guidage de flux (632) comprend une pluralité de nervures espacées de guidage de flux (6321) qui dépassent d'une paroi inférieure de la cavité de réception (6314) et s'étendent d'un bord de la paroi inférieure de la cavité de réception (6314) jusqu'à un centre de la paroi inférieure de la cavité de réception (6314).
